# EUROPÄISCHE PATENTSCHRIFT

(11) **EP 2 903 235 B1**
(45) Veröffentlichungstag und Bekanntmachung des Hinweises auf die Patenterteilung: **15.03.2017**
(21) Anmeldenummer: 15000103.0
(22) Anmeldetag: 16.01.2015
(51) Int. Cl.: H04L 29/06, H04W 12/08

(54) **Verfahren zur Handhabung von Sicherheitseinstellungen in einem mobilen Endgerät bzw. zur Zugangskontrolle, Mobiles Endgerät, Computerprogramm, Softwareprodukt und digitales Speichermedium**
Method for handling security configurations in a mobile terminal or for controlling access, mobile terminal, computer program, software product and digital storage medium
Procédé de manipulation de réglages de sécurité dans un terminal mobile ou pour le contrôle d'accès, terminal mobile, programme informatique, produit logiciel et support d'enregistrement numérique

(30) Priorität: 23.01.2014 DE 102014000963
(43) Veröffentlichungstag der Anmeldung: 05.08.2015
(73) Patentinhaber: Unify GmbH & Co. KG, 80807 München (DE)
(72) Erfinder: Totzke, Jürgen, 85586 Poing (DE); Klug, Karl, 83714 Miesbach (DE)
(74) Vertreter: Fritzsche, Thomas

(56) Entgegenhaltungen:
- US-A1- 2008 052 395
- US-A1- 2013 254 831
- US-A1- 2014 006 347

## Beschreibung

Die Erfindung betrifft ein Verfahren zur Handhabung von Sicherheitseinstellungen in einem mobilen Endgerät, ein Verfahren zur Zugangskontrolle, ein mobiles Endgerät, ein Computerprogramm, ein Softwareprodukt und ein digitales Speichermedium.

Die immer häufigere Verwendung von mobilen Geräten und die Nutzung von privaten mobilen Geräten im beruflichen Umfeld (BYOD - "Bring Your Own Device") stellt eine Herausforderung an Sicherheitsmechanismen bei der Nutzung solcher Geräte dar. Heutige IT-Sicherheitsmechanismen sind meist plattform-, geräte-, benutzer- oder anwendungsorientiert implementiert. IT-Plattformen werden in der Regel zentral verwaltet (gemanaged) und deren Betriebssysteme gehärtet. Sicherheitskriterien von Anwendungen werden meist durch den Anbieter festgelegt, z.B. bei Web-Anwendungen wird der Zugang einfach (http) oder gesichert (https) realisiert, die maximal verwendete Verschlüsselungstiefe wird über den Browser bzw. über den Service bestimmt. Der Zugang zur IT-Anwendungen wird für Benutzer meist über einen Benutzer-Account oder Domain-Anmeldung geregelt, bei vorhandener PKI-Infrastruktur oder Domain-Controllern gegebenenfalls auch über Single-Sign-On-Mechanismen. Das heißt, in einem gemanagten Umfeld lässt sich somit weitgehend Sicherheit implementieren. Bei mobilen Anwendungsbereichen stellt es ein Problem dar, dass Benutzer bewusst Sicherheitsmechanismen umgehen können, um mögliche damit verbundene Hürden zu übergehen. Die Nutzung einer Anwendung oder die Informationsbeschaffung auf dem mobilen Gerät erhält oft Priorität gegenüber dem Sicherheitsaspekt. Es wäre wünschenswert, auch bei solchen Nutzungen eine vergleichbare Sicherheit wie in gemanagten Umfeldern zu haben.

Es ist bekannt, Sicherheitslösungen basierend auf Authentifizierung und Autorisierung des Benutzers oder des Gerätes und Verschlüsselungstechniken zu verwirklichen. Der sichere Zugang kann dabei für den berechtigten Nutzer für eine bestimmte Zeit (z. B. Betriebssystem-Login oder Sitzungsdauer einer Anwendung) gewährt werden. Oft ist sich der Benutzer im konkreten Fall aber gar nicht im Klaren, ob er IT-Anwendungen und Informationen sicher oder unsicher verwendet.

Aus der US 2013/0254831 A1 sind ein Verfahren und eine Vorrichtung zur kontextbewussten mobilen Sicherheit bekannt, wobei eine Sicherheitspolitik einer Vorrichtung auf der Grundlage von Kontextinformationen, die mit der Vorrichtung verknüpft sind, automatisch wenigstens teilweise geändert werden können. Die Einhaltung vorgegebener Sicherheitspolitiken wird unter Verwendung einer CAMSPA-API auf der Vorrichtung in einem CAMSPA-Netz sichergestellt bzw. erzwungen (CAMSPA - engl. "Context Aware Mobile Security Policy Application").

Aus der US 2008/0052395 A1 ist ein Verfahren zum Schutz von Daten, die auf einem mobilen Client-Computer oder von diesem aus zugreifbar sind, durch ein Server-Computersystem bekannt. Auf der Grundlage eines Orts, der einer Netzwerkumgebung, in welchem sich der mobile Client-Computer befindet, zugeordnet ist, und von Sicherheitsmerkmalen wie etwa der Verbindungsart, der Aktivität von Antivirus-Programmen oder der Art des Netzwerkzugangs werden unterschiedliche Sicherheitspolitiken erzwungen. Erzwingungsmechanismen können adaptives Blockieren von Ports oder die Verbergung oder Verschlüsselung von Dateien umfassen.

Sogenannte Security-Assessment-Checklisten sollen dazu beitragen, IT-Systeme und insbesondere mobile Zugänge zu diesen Systemen nach dem aktuellen Stand der Sicherheitstechnik sicher zu machen. Dabei ist eine absolute Sicherheit nicht erzielbar, sondern es ist immer zwischen dem Aufwand, die Sicherheit eines Systems anzugreifen, und der daraus wahrscheinlich anzunehmenden Schadenshöhe und Schadensbreite abzuwägen. Bestimmte Sicherheitserfordernisse ergeben sich auch aus gesetzlichen Verfahren oder Regularien.

Es ist eine Aufgabe der vorliegenden Erfindung, diesen Ansatz weiterzuentwickeln. Eine spezielle Aufgabe besteht darin, bei der mobilen Nutzung eines Endgeräts und der Nutzung unterschiedlichster Anwendungen eine einfache aber trotzdem sichere Handhabung bereitzustellen. Eine weitere Aufgabe besteht darin, ein dem Kontext angemessenes Sicherheitsprofil auf einem mobilen Endgerät automatisiert und kompatibel zu aktuellen Sicherheitsanforderungen einzustellen. Eine noch weitere Aufgabe besteht darin, dem Benutzer eines mobilen Endgeräts mit kontextabhängiger automatischer Sicherheitseinstellung eine Einflussnahme zu ermöglichen, ohne aktuelle Mindest-Sicherheitsanforderungen auszuhebeln. Schließlich besteht eine Aufgabe der Erfindung darin, Zugangskontrollen hinsichtlich mobiler Endgeräte und die Durchsetzung von Sicherheitsstandards im Umfeld von gewerblichen oder öffentlichen Einrichtungen wie etwa Firmengeländen, Produktionsstätten, Veranstaltungs-und Ausstellungsorten etc., zu erleichtern.

Die Aufgabe wird erfindungsgemäß durch die Merkmale der unabhängigen Ansprüche gelöst. Vorteilhafte Ausführungsformen und Weiterentwicklungen der Erfindung sind in den Unteransprüchen angegeben.

Nach einem ersten Gesichtspunkt der Erfindung wird ein Verfahren zur Handhabung von Sicherheitseinstellungen eines mobilen Endgeräts vorgeschlagen, mit den Schritten:
a) Feststellen von Einsatzbedingungen des Endgeräts;
b) Vorgeben von Mindest-Sicherheitsanforderungen für das Endgerät entsprechend den Einsatzbedingungen durch Auswerten von Kontextinformation zu den Einsatzbedingungen des Endgeräts;
c) automatisches Festlegen und Einhalten von Sicherheitseinstellungen auf dem Endgerät, wobei die Sicherheitseinstellungen mindestens den Mindest-Sicherheitsanforderungen für das Endgerät entsprechen; und
d) Steuern von Anwendungen entsprechend den Sicherheitseinstellungen wobei für jede aktive Anwendung oder bei Aufruf einer Anwendung die Schritte durchgeführt werden:
d1) Bestimmen von Mindest-Sicherheitsanforderungen der aktiven bzw. aufgerufenen Anwendung,
d2) Prüfen, ob die festgelegten Sicherheitseinstellungen auf dem Endgerät wenigstens den Mindest-Sicherheitsanforderungen der Anwendung entsprechen;
d3) wenn die Antwort in Schritt d2) nein lautet: Anbieten einer Anpassung der Sicherheitseinstellungen auf dem Endgerät an die Mindest-Sicherheitsanforderungen der Anwendung einem Benutzer des Endgeräts, und
d4) wenn die Antwort in Schritt d2) ja lautet: Belassen der Sicherheitseinstellungen auf dem Endgerät,
wobei die Ausführung der vorstehenden Schritte a) bis d) durch wenigstens einen auf dem Endgerät aktivierten Agenten gesteuert wird.

Im Sinne der Erfindung ist ein mobiles Endgerät jedes Gerät, das zur mobilen Datenverarbeitung und -kommunikation eingerichtet ist, insbesondere Funktelefone, Smartphones, PDAs, tragbare Rechner wie Laptops, Notebooks, Tablett-Computer. Als ein Agent wird im Sinne der Erfindung ein Softwareprogramm mit autonomen (d.h., unabhängig von Benutzereingriffen arbeitenden), modal adaptiven (d.h., aufgrund eigener Zustände und von Zuständen der Umgebung seine eigenen Einstellungen wie etwa Parameter und/oder Struktur ändernden), proaktiven (d.h., aufgrund eigener Initiative aktiven) und reaktiven (d.h., auf Änderungen der Umgebung reagierenden) Eigenschaften bzw. Funktionalitäten, vorzugsweise Software-Sensor und/oder Hardware-Sensor/Gerätetreiber, hier insbesondere zur Einhaltung von Mindest-Sicherheitsanforderungen, verstanden. Insbesondere kann ein Agent auch als eine Anwendung verstanden werden, die Interessen einer dritten Partei (Arbeitgeber, Geschäftspartner, Dienstleister, Veranstalter, Öffentliche Einrichtung) dient. Ein Agent kann vorab geladen und installiert werden oder installiert sich bei Aktivierung selbst. Als Einsatzbedingungen werden im Sinne der Erfindung Geräteeigenschaften, Gerätestandort, Netzwerkzustand, Firmenpolicy hinsichtlich Internet- und Intranetnutzung und dergleichen verstanden. Als Sicherheitseinstellungen werden im Sinne der Erfindung eine Sicherheitsstufe bzw. ein Sicherheitsprofil im Hinblick auf Geräte-, Netzwerk-, Firmenpolicy-Eigenschaften etc. verstanden. Dabei ist eine Mindest-Sicherheitsanforderungen eine mindestens erforderliche Sicherheitsstufe, die durch den Agenten je nach den Einsatzbedingungen durch Policies erzwungen werden kann. Das Feststellen der Einsatzbedingungen kann beispielsweise, aber nicht nur, die Auswertung von Positionsdaten einer GPS- oder sonstigen Positionsbestimmungseinrichtung, das Auswerten von Sensordaten, der Empfang von Metadaten von einer externen Instanz wie etwa einem MDM-Server (Mobile Device Management) oder dergleichen der dritten Partei umfassen. Anwendungen sind im Sinne der Erfindung Softwareprogramme (Stapelverarbeitungen, Makros, mobile Apps, die durch eine Firmen-Policy etwa im Hinblick auf potentielle Schadsoftware eingeschränkt werden sollen), Netzwerk-Ressourcen (Intranet-Seiten, Internet-Seiten, Recherchenzugänge, die durch eine Firmen-Policy etwa im Hinblick auf politisch unkorrekte Inhalte oder Kostenanfall eingeschränkt werden sollen), Geräte-Anwendungen (Tonaufzeichnung, Kamera, Lautsprecher, Netzwerkzugang, Funkfunktion, die durch einen Firmen-Policy etwa im Hinblick auf Sicherheitsinteressen eingeschränkt werden sollen). Ein Steuern kann beispielsweise, aber nicht nur, ein Kenntlichmachen aufrufbarer / nicht aufrufbarer Anwendungen, Blockieren des Aufrufs bzw. Beenden ("Abschießen") von unerwünschten Anwendungen, Selektieren/Blockieren/Beenden von bestimmten Funktionen. Es versteht sich, dass die Schritte a) bis d) endlos wiederholt werden können.

Mit dem erfindungsgemäßen Verfahren wird eine kontextabhängige und anwendungsspezifische Sicherheitshandhabung eingeführt, die eine einfache und sichere Nutzung mobiler Endgeräte im Umfeld Dritter mit Einschränkungen im Hinblick auf deren legitime Interessen, aber nur soweit nötig und nur im gegebenen Fall, ermöglicht. Betriebsinterne Sicherheitsstandards können erzwungen werden, ortsabhängig, auch kleinräumig, etwa in Bezug auf bestimmte Gelände, Gebäude, Abteilungen, Räume.

Durch ein Darstellen der festgelegten Sicherheitseinstellungen und/oder Mindest-Sicherheitsanforderungen in einer für einen Benutzer des Endgeräts erkennbaren Weise, insbesondere auf einer Anzeige des Endgeräts, gemäß einer bevorzugten Weiterbildung der Erfindung sind dem Benutzer der aktuelle Status und mögliche Einschränkungen bewusst, er wird nicht "überfallen", und er kann ggf. eingreifen bzw. sein Verhalten anpassen. Dabei umfasst ein Darstellen im Sinne der Erfindung jede für eine Wahrnehmung durch einen Benutzer geeignete Art, insbesondere, aber nicht nur, Anzeigen auf einer Bildschirmanzeige, Einzel-LEDs (für bestimmte gerätespezifische Funktionen), akustische Warnungen, Vibration oder dergleichen. Beispielsweise kann bei Änderung der Sicherheitseinstellungen im Endgerät ein Alarm ausgegeben werden.

Eine bevorzugte Ausführungsform der Erfindung umfasst ein Kennzeichnen von Anwendungen hinsichtlich einer Einschränkung, die sich aus den festgelegten Sicherheitseinstellungen ergibt, insbesondere durch Verändern eines Sinnbilds der jeweiligen Anwendung auf einer Anzeige des Endgeräts in Abhängigkeit von den festgelegten Sicherheitseinstellungen. Als Sinnbild wird jede Form der Repräsentierung einer Anwendung, wie etwa ein Listeneintrag, ein Symbol, ein Icon, ein Link oder dergleichen verstanden. Das Verändern kann beispielsweise, aber nicht nur, ein Hinzufügen eines Symbols, eine Schattierung, eine Umrahmung, jeweils ggf. in verschiedenen Farben je nach Status, eine Blass- oder Farblosdarstellung und dergleichen umfassen. Dadurch kann ein Benutzer schon vorab die Wirksamkeit der gegenwärtigen Sicherheitseinstellungen abschätzen und ggf. anpassen.

Gemäß einer bevorzugten Weiterbildung der Erfindung kann ein Verändern der Sicherheitseinstellungen, wobei ein Unterschreiten der Mindest-Sicherheitsforderungen verhindert wird, auf wenigstens eine der folgenden Situationen hin erfolgen:
- Interaktion des Benutzers,
- Start einer Anwendung,
- Beenden einer Anwendung,
- Veränderungen von Einsatzbedingungen.
Damit kann eine erhöhte Flexibilität erzielt werden, Da ein Unterschreiten der Mindest-Sicherheitsforderungen verhindert wird, können Sicherheitsanforderungen zuverlässig eingehalten werden.

Gemäß einer bevorzugten Ausführungsform der Erfindung wird das Einhalten der Mindest-Sicherheitsanforderungen durch wenigstens eine der folgenden Maßnahmen sichergestellt:
- Ausschalten des Endgeräts;
- Beenden, Deaktivieren oder Blockieren von Anwendungen, welche die Mindest-Sicherheitsforderungen nicht erfüllen;
- Beenden, Deaktivieren oder Blockieren von Funktionen, welche die Mindest-Sicherheitsforderungen verletzen oder verletzen würden;
- Ignorieren von Benutzer-Einstellungen oder Benutzer-Eingaben, welche die Mindest-Sicherheitsforderungen verletzen würden.
Dadurch wird auch eine zwingende und ggf. automatische Durchsetzung der Sicherheitsanforderungen sichergestellt.

Gemäß einem weiteren Gesichtspunkt der Erfindung wird ein Verfahren zur Kontrolle von Sicherheitseinstellungen eines mobilen Endgeräts vorgeschlagen, mit den Schritten:
A) Lokalisieren des Endgeräts;
B) Kontaktieren des Endgeräts;
C) Erkennen, ob ein Agent zur Durchführung des Verfahrens nach einem der Ansprüche 1 bis 5 auf dem Endgerät aktiviert ist; und
D) Wenn die Antwort hinsichtlich Schritt C) nein lautet: Ausgeben einer Warnung,
wobei die Schritte A) bis D) von einer Instanz außerhalb des Endgeräts durchgeführt werden.

Dieses Verfahren ist zu dem zuvor beschriebenen Verfahren zur Handhabung von Sicherheitseinstellungen komplementär. Es kann beispielsweise durch Einrichtungen eines Sicherheitsdienstes, Werksschutzes, etc. wie etwa einen Sicherheitsserver, MDM-Server oder dergleichen durchgeführt werden. Die Erkennung kann auch die Feststellung umfassen, ob ein bestimmter Eingriff durch den Agenten möglich ist (z.B. Deaktivierung von Kamera, Tonaufzeichnung). Das Lokalisieren kann beispielsweise ein Anpeilen einer Funkschnittstelle umfassen. Das Kontaktieren kann beispielsweise ein Aufbauen einer Kommunikationsverbindung über eine Funkschnittstelle, GSM-Schnittstelle, Infrarotschnittstelle, Bluetooth-Schnittstelle oder dergleichen umfassen. Eine Warnung kann beispielsweise durch eine Warnlampe, eine Warnhupe, ein Blockieren einer Schranke oder einer Personenvereinzelungsanlage, einen Hinweis in einem Ohrhörer einer Sicherheitsperson, etc. verwirklicht werden. Die Warnung kann auch eine Identifizierung und Lokalisierung des Endgeräts bzw. der das Endgerät mit sich führenden Person für ein Sicherheitspersonal umfassen. Durch das Verfahren dieses Gesichtspunkts können auch Zugangskontrollen erleichtert werden. Optional kann ein automatisierter Upload und/oder eine automatisiere Aktivierung der Agenten auf dem Endgerät vorgesehen sein.

Die Erfindung betrifft in weiteren Gesichtspunkten auch ein mobiles Endgerät, das zur Durchführung des beschriebenen Verfahrens eingerichtet ist, ein Computerprogramm, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird, ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf dem Computer ausgeführt wird, aufweist, und ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen, verkörpert sein kann. Dabei kann der Computer, je nachdem, welches Verfahren durchgeführt wird, in dem Endgerät oder der externe Instanz verkörpert sein. Die Aufgabe der vorliegenden Erfindung wird durch diese Vorrichtung aus denselben Gründen gelöst, wie diese weiter oben für das entsprechende Verfahren angegeben wurden.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. Ausführungsbeispiele können miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind
- Fig. 1: eine Darstellung eines Kommunikationssystems mit einem Endgerät als ein Ausführungsbeispiel der Erfindung;
- Fig. 2: eine Darstellung eines Ausschnitts des Kommunikationssystems von Fig. 1 mit einem Endgerät als ein weiteres Ausführungsbeispiel der Erfindung;
- Fig. 3: ein Ablaufdiagramm eines Prozesses zur Automatischen Sicherheitseinstellung in einem Verfahren gemäß einem Ausführungsbeispiel der Erfindung;
- Fig. 4: ein Ablaufdiagramm eines Prozesses zur Manuellen Sicherheitsanpassung in einem Verfahren gemäß einem Ausführungsbeispiel der Erfindung;
- Fig. 5: eine Darstellung von Bildschirminhalten gemäß einem Ausführungsbeispiel der Erfindung;
- Fig. 6: ein Ablaufdiagramm eines Teilprozesses zur MindestAnwendungssicherheit in einem Verfahren gemäß einem Ausführungsbeispiel der Erfindung;
- Fig. 7: ein Ablaufdiagramm eines Prozesses zur Anwendungskontrolle in einem Verfahren gemäß einem Ausführungsbeispiel der Erfindung;
- Fig. 8: ein Ablaufdiagramm eines Prozesses zum Anwendungsaufruf in einem Verfahren gemäß einem Ausführungsbeispiel der Erfindung;
- Fig. 9: ein Ablaufdiagramm eines Prozesses zur Anwendungskennzeichnung in einem Verfahren gemäß einem Ausführungsbeispiel der Erfindung;
- Fig. 10: ein Ablaufdiagramm eines Prozesses zur Anwendungsbeendigung in einem Verfahren gemäß einem Ausführungsbeispiel der Erfindung;
- Fig. 11: ein Ablaufdiagramm eines Gesamtprozesses zur Handhabung von Sicherheitseinstellungen in einem Verfahren gemäß einem Ausführungsbeispiel der Erfindung;
- Fig. 12: ein Ablaufdiagramm eines Prozesses zur Eingangskontrolle in einem Verfahren gemäß einem Ausführungsbeispiel der Erfindung;
- Fig. 13: eine Tabelle zur Veranschaulichung einer Sicherheitsmatrix in einem Verfahren gemäß einem Ausführungsbeispiel der Erfindung;
- Fign. 14A-14C: eine Tabelle zur Veranschaulichung von Sicherheitsbewertungen in einem Verfahren gemäß einem Ausführungsbeispiel der Erfindung;

Die Darstellungen in den Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

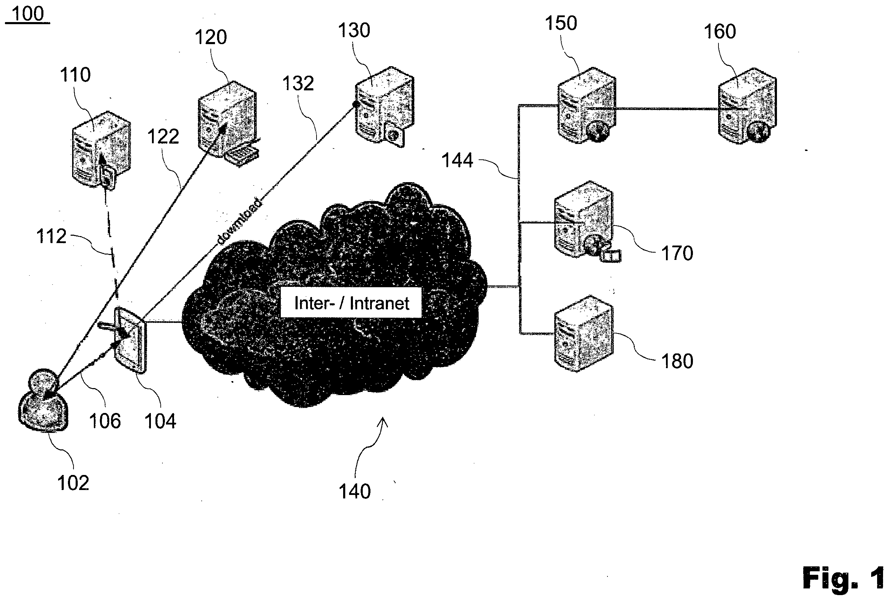

Fig. 1 zeigt ein schematisches Blockschaubild zur Veranschaulichung eines Kommunikationssystems 100 mit einem mobilen Endgerät 104 als ein Ausführungsbeispiel der vorliegenden Erfindung. Das Kommunikationssystem 100 kann ein Firmennetz einer Firma sein.

Wie in Fig. 1 gezeigt, ist in dem Kommunikationssystem 100 eine Person 102 mittels eines mobilen Endgeräts 104 eingebunden. Die Person 102 ist in der Lage, das Endgerät 104 über eine Benutzer-Interaktion 106 manipulieren. Ein MDM-Server bzw. Mobilgeräteverwaltungsserver 110 (MDM für engl. Mobile Device Management) ist mit dem Endgerät 104 über eine Funkverbindung 112 kommunikationsfähig. Das Kommunikationssystem 100 weist ferner einen Identitätsmanagement-Server 120, der durch die Person 102 mittels einer Benutzer-Interaktion 122 ansprechbar ist, einen Anwendungs-Server 130, der mit dem Endgerät 104 über eine Funkverbindung 132 kommunikationsfähig ist, auf. Ferner ist das Endgerät 104 über das Internet/Intranet 140 mit mehreren Servern, welche einen Webdienste-Server 150, einen Webdienste-Server 160 für referenzierte Webdienste, einen Medien-Streaming-Server 170 und einen Web-Anwendungs-Server 180 umfassen, kommunikationsfähig.

Obschon in Fig. 1 nicht näher dargestellt, sind auf dem Endgerät 106 mehrere Agenten aktiviert, welche einen MDM-Agenten, einen Identitätsagenten, einen Geräteagenten, einen Netzwerkagenten und einen Anwendungsagenten umfassen, installiert und aktiviert, wie im Weiteren genauer beschrieben wird.

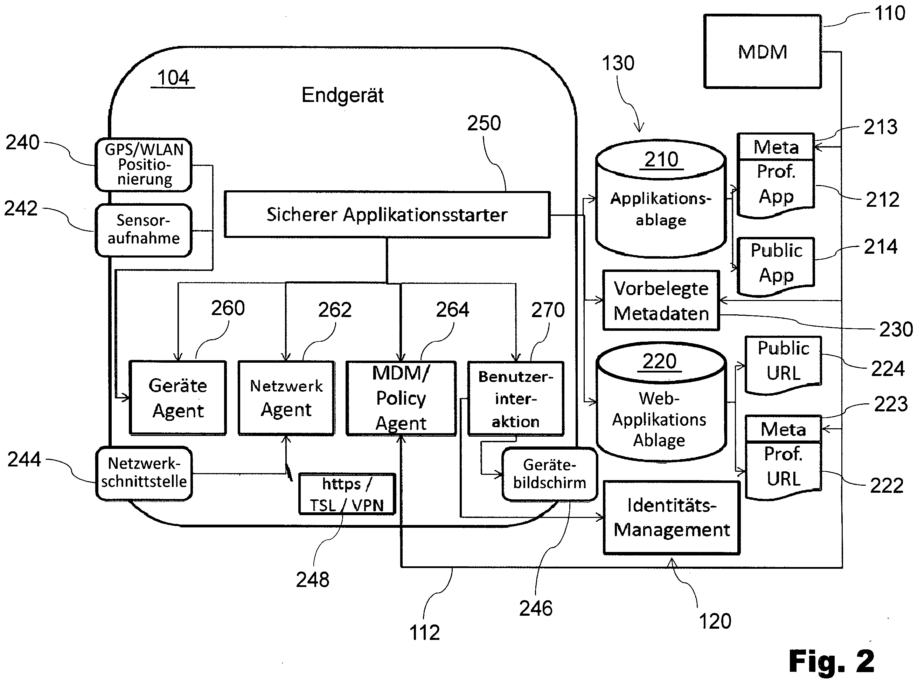

Ein Ausschnitt des Kommunikationssystems 100 ist in Fig. 2 in Form eines schematischen Blockschaubilds veranschaulicht. Der Ausschnitt umfasst das mobile Endgerät 104, den MDM-Server 110, den Identitätsmanagement-Server 120, den Anwendungs-Server 130 und den Web-Anwendungs-Server 180.

Gemäß der Darstellung in Fig. 2 weist der Anwendungs-Server 130 eine Anwendungsablage 210 auf. In der Anwendungsablage 210 sind Firmenanwendungen 212, denen Metadaten 213 zugeordnet sind, und Öffentliche Anwendungen 214 abgelegt. Gleichermaßen weist der Web-Anwendungs-Server 180 eine Web-Anwendungs-Ablage 220, in welcher Firmen-URL's 222, denen Metadaten 223 zugeordnet sind, und öffentliche URL's 224 abgelegt sind, auf. Der MDM-Server 110 liefert vorbelegte Metadaten 230 und greift auf die Metadaten 213 der Applikationsablage 210 des Applikationsservers 130 und auf die Metadaten 223 der Applikationsablage 220 des Web-Applikationsservers 180 zu, um diese zu verwalten und gegebenenfalls bereitzustellen.

Die vorbelegten Metadaten 230 können verwendet werden um beispielsweise sämtliche Anwendungen von "Google" auf einem Endgerät zu sperren. Die Sperrung erfolgt über eine zu sperrende Domäne "google.com", die in den vorbelegten Metadaten 230 beispielsweise als Eintrag in einer Blocklist abgelegt wird. Die vorbelegten Metadaten können generisch, also nicht spezifisch auf eine einzelne Anwendung / einzelne Anwendungen, aber auch spezifisch hinsichtlich einer Anwendung verwendet werden.

Das Endgerät 104 weist eine GPS-WLAN-Positionierungseinheit 240, eine Sensor-Aufnahmeeinheit 242, die ausgeführt sein kann als Schnittstelle für Sensoren oder als zusätzlicher Sensor, beispielsweise Bluetooth-Sensor, eine Netzwerk-Schnittstelle 244, einen Gerätebildschirm 246 und eine https/TSL/VPN-Schnittstelle 248 auf. Des Weiteren sind ein Sicherer Anwendungsstarter 250, ein Geräte-Agent 260, ein Netzwerk-Agent 262, ein MDM-/Policy-Agent 264 vorgesehen, die als Software-Produkt installiert oder als Hardware-Einheit integriert bzw. angeschlossen und aktiviert sind. Eine Benutzer-Interaktions-Schnittstelle (UII - engl. User Interaction Interface) 270 erlaubt die Interaktion des Benutzers 102 (Fig. 1) mit dem Endgerät 104.
Wie in Fig. 2 gezeigt, greift der Geräte-Agent 260 auf Daten der GPS/WLAN-Positionierungseinheit 240 und auf Daten der Sensor-Aufnahmeeinheit 242 zu. Die Sensoraufnahmeeinheit 242 könnte beispielsweise über eine Schnittstelle zu einem Bluetooth-Gerätetreiber des Gerätes die Nähe zu einem gekoppelten Desktop Telefon feststellen (SdT) und damit auf den als sicher eingeschätzten Einsatzort "Am Arbeitsplatz" schließen lassen. Dadurch ist es dem Geräte-Agenten 260 beispielsweise möglich, den Standort und sonstige Einsatzbedingungen des Endgeräts 104 zu bestimmen. Der Netzwerk-Agent 262 greift auf Daten der Netzwerkschnittstelle 244 und der https/TSL-VPN-Schnittstelle 248 zu. Der MDM/Policy-Agent 264 greift auf Daten des MDM-Servers 110, inbesondere auf die durch den MDM-Server 110 verwalteten Metadaten 213, 223, 230, zu. Über die Benutzerinteraktionsschnittstelle 270 ist es dem Benutzer 102 (Fig. 1) möglich, mittels des Endgeräts 104 mit dem Identitätsmanagementserver 120 zu kommunizieren, um sich beispielsweise an einem Firmennetz (d.h., dem Kommunikationssystem 100, Fig. 1) anzumelden. Über die Benutzerinteraktionsschnittstelle 270 werden auch Darstellungen an dem Gerätebildschirm 246 erzeugt und, sofern der Gerätebildschirm 246 ein becührungssensitiver Bildschirm ist, Eingaben über den Gerätebildschirm 246 interpretiert.

Der sichere Anwendungsstarter 250, der beispielsweise als Betriebssystemprogramm / -funktionalität ausgestaltet sein kann, greift auf die in der Anwendungsablage 210 des Anwendungsservers 130 und in der Web-Anwendungsablage 220 des Web-Anwendungsservers 180 abgelegten Applikationen 212, 214 und Verknüpfungen (URS's) 222, 224 zu. Der sichere Anwendungsstarter 250 steht ferner in Verbindung mit dem Geräteagenten 260, dem Netzwerkagenten 262, dem MDM/Policy-Agenten 264 und der Benutzerinteraktionsschnittstelle 270.

Im Zusammenspiel zwischen den auf dem Endgerät 104 installierten Agenten 260, 262, 264 und den Systeminstanzen 110, 120, 130, 180 werden Prozesse verarbeitet, welche den sicheren Zugang und Betrieb des Endgeräts 104 in einer Umgebung des Kommunikationssystems 100 steuern. Einige dieser Prozesse werden nachstehend genauer beschrieben.

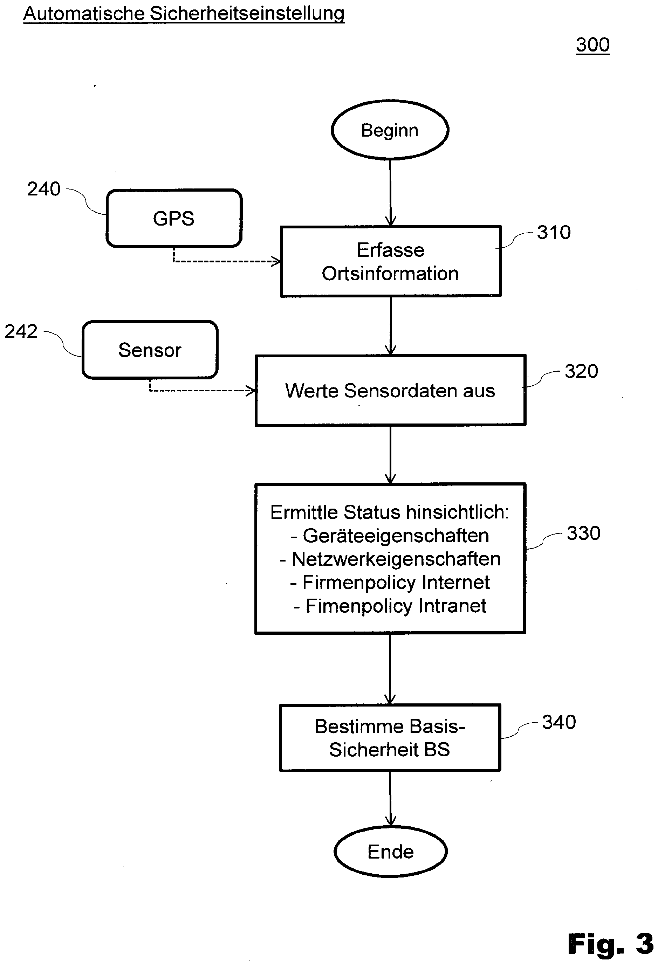

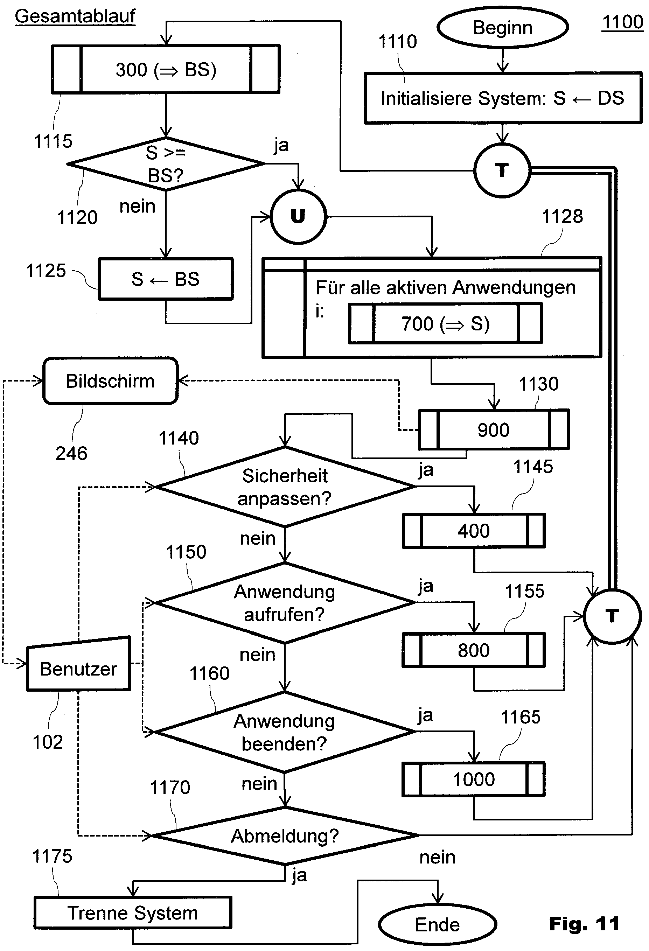

Hierzu zunächst in Fign. 3 bis 10 einige Prozesse gezeigt, die als Subroutinen zu verstehen sind, die untereinander sowie von einem in Fig. 11 gezeigten Gesamtablauf aufrufbar sind.

Anhand eines Ablaufdiagramms in Fig. 3 wird nun ein Prozess 300 zur automatischen Einstellung einer Basis-Sicherheit BS in dem Endgerät 104 als ein Ausführungsbeispiel der vorliegenden Erfindung beschrieben. Als Basis-Sicherheit BS ist dabei eine Mindest-Sicherheitsstufe zu verstehen, die für das Endgerät 104 innerhalb des Kommunikationssystems 100 (beispielsweise Firmennetz) gilt und die nicht unterschritten werden darf.

Nach Beginn (Aufruf) des Prozesses 300 wird in Schritt 310 anhand von Daten der GPS/WLAN-Positionierung 240 ein Ortsinformation erfasst. Danach werden in Schritt 320 Daten der Sensoraufnahme 242 ausgewertet. Danach wird in Schritt 330 ein Status des Endgeräts 104 hinsichtlich Geräteeigenschaften, Netzwerkeigenschaften und einer Firmenpolicy in Bezug auf Internet und Intranet ermittelt. Schließlich wird in Schritt 340 die Basis-Sicherheit BS für das Endgerät 104 bestimmt. Danach endet der Prozess 300. Mit anderen Worten, es erfolgt ein Rücksprung zum aufrufenden Prozess unter Übergabe der Basis-Sicherheit BS als Ausgangsparameter. Die Basis-Sicherheit BS kann als eine Mindest-Sicherheitsforderung im Sinne der Erfindung verstanden werden.

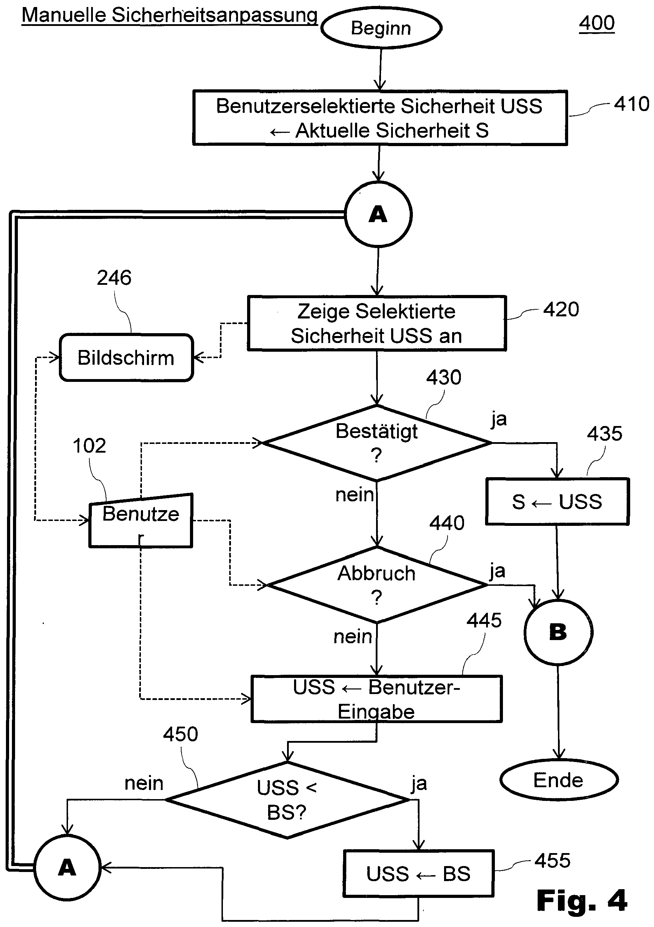

Anhand eines Ablaufdiagramms in Fig. 4 wird nun ein Prozess 400 zur manuellen Anpassung einer gegenwärtigen Sicherheit S in dem Endgerät 104 als ein Ausführungsbeispiel der vorliegenden Erfindung beschrieben. Als gegenwärtige Sicherheit S ist dabei eine Sicherheitseinstellung im Sinne der Erfindung zu verstehen, die für das Endgerät 104 zu einem jeweiligen Zeitpunkt gilt. Eines der Ziele des Prozesses ist es, sicherzustellen, dass der Benutzer des Endgeräts 104 die gegenwärtige Sicherheit S nach seinen Bedürfnissen verändern kann, dabei aber die Basis-Sicherheit BS nicht unterschreiten kann.

Nach Beginn (Aufruf) des Prozesses 400 wird in Schritt 410 eine flüchtige Variable USS, die für eine benutzerselektierte Sicherheit (engl. User-Selected Security) innerhalb des Prozesses 400 steht, mit dem Wert der gegenwärtigen Sicherheit S belegt. Dies bedeutet, dass beim Aufruf des Prozesses 400 die gegenwärtige Sicherheit S als Eingabeparameter übergeben wird. Über eine Übergangsstelle A führt der Prozess 400 zu Schritt 430, in welchem auf dem Bildschirm 246 des Endgeräts 104 die benutzerselektierte Sicherheit USS angezeigt wird. Über eine Auswertung einer Interaktion des Benutzers 102 wird nun in Schritt 430 festgestellt, ob der Benutzer 102 die gegenwärtig angezeigte benutzerselektierte Sicherheit USS bestätigt oder nicht.

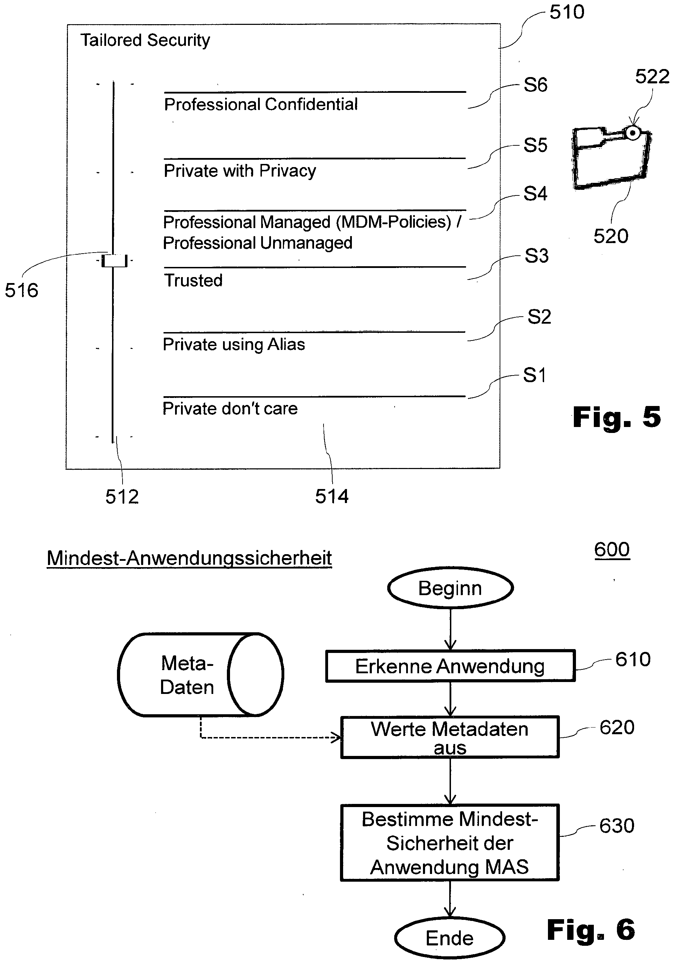

Zur Verdeutlichung der Benutzer-Interaktion zeigt Fig. 5 eine Bildschirmanzeige während Aufrufs des Prozesses 400 als ein Ausführungsbeispiel der vorliegenden Erfindung. Gemäß der Darstellung in Fig. 5 weist die Bildschirmanzeige ein Auswahlfeld 510 und, beispielhaft für eine Anwendung, ein Anwendungs-Icon 520 auf. Das Auswahlfeld 520 weist eine Skala mit einer Beschriftung 514 und einem Schieber 516 auf. Die Skala 514 weist Felder für vorgegebene Sicherheitsstufen S1 bis S6 auf. Jede der Sicherheitsstufen S1 bis S6 steht für ein festgelegtes Sicherheitsprofil bzw. eine festgelegte Sicherheitseinstellung und kann mehrere Teilaspekte aufweisen. Der Schieber 516 ist innerhalb der Skale 512 auf eine Benutzer-Interaktion hin beweglich. D.h., durch eine Eingabe auf einer Tastatur, ein Festhalten und Bewegen mit einem Zeigegerät (Maus oder dergleichen) oder Berühren und Bewegen auf einer berührungssensitiven Oberfläche des Bildschirms 246 kann der Schieber 516 in eine Position entsprechend einer gewünschten Sicherheitsstufe S1 bis S6 verschoben werden. Eine Bestätigung der gegenwärtigen Auswahl (Position des Schiebers 516) oder ein Verlassen des Auswahlfeldes (Abbruch der Sicherheitseinstellung) kann auf an sich bekannte Arten erfolgen. Beispielsweise steht für die Bestätigung der gegenwärtigen Auswahl ein Return-Taste, ein OK-Feld auf dem Bildschirm 246, eine vordefinierte Berührungsfolge auf dem Bildschirm 246 oder dergleichen bereit. Gleichermaßen steht für das Verlassen des Auswahlfeldes eine Esc-Taste, ein Abbruch-Feld auf dem Bildschirm 246, eine vordefinierte Berührungsfolge auf dem Bildschirm 246 oder dergleichen bereit.

Das Anwendungs-Icon 520 ist mit einem Markierungselement 522 versehen, welches in Abhängigkeit von der eingestellten Sicherheitsstufe anzeigt, ob die durch das Anwendungs-Icon 520 verknüpfte Anwendung aktivierbar ist oder nicht.

Zurück zum Ablauf des Prozesses 400 in Fig. 4. Falls die Feststellung in Schritt 430 positiv ist (ja), wird in Schritt 435 die gegenwärtige Sicherheit S mit der benutzerselektierten Sicherheit USS belegt, und der Prozess führt zu einer Übergangsstelle B, woraufhin der Prozess endet, indem die gegenwärtige Sicherheit S als Ausgangsparameter übergeben wird. Ist die Feststellung in Schritt 430 negativ (nein), schreitet der Prozess 400 zu Schritt 440 fort, in welchem festgestellt wird, ob der Benutzer 102 die Verarbeitung des Prozesses 400 abgebrochen hat. Falls die Feststellung in Schritt 430 positiv ist (ja), führt der Prozess zu der Übergangsstelle B, woraufhin der Prozess endet, indem die gegenwärtige Sicherheit S als Ausgangsparameter übergeben wird. Da in diesem Fall die benutzerselektierte Sicherheit nicht bestätigt wurde, ist die übergebene gegenwärtige Sicherheit S mit der bei Aufruf des Prozesses 400 übergebenen Sicherheit identisch, d.h., bei Abbruch des Prozesses 400 durch den Benutzer 102 wird die gegenwärtige Sicherheit S nicht geändert. Ist die Feststellung in Schritt 440 negativ (nein), schreitet der Prozesse 400 zu Schritt 445 fort, in welchem eine eventuelle Benutzer-Eingabe der benutzerselektierten Sicherheit USS zugewiesen wird. Danach wird in Schritt 450 festgestellt, ob die benutzerselektierte Sicherheit USS kleiner ist als die Basis-Sicherheit BS, die bei Aufruf des Prozesses 400 ebenfalls als Eingangsparameter übergeben wird, aber durch den Prozess 400 nicht verändert werden kann. Falls die Feststellung in Schritt 450 positiv ist (ja), bedeutet dies, dass die benutzerselektierte Sicherheit USS unzulässig ist, und daher wird in einem anschließenden Schritt 455 der benutzerselektierten Sicherheit USS die Basis-Sicherheit BS, welche die kleinstmögliche Sicherheit ist, zugewiesen. Danach führt der Prozess zu der Übergangsstelle A, woraufhin die mit Schritt 420 beginnenden Abläufe erneut durchlaufen werden, bis der Prozess über die Übergangsstelle B einmal endet. Ist die Feststellung in Schritt 450 negativ (nein), bedeutet dies, dass die benutzerselektierte Sicherheit USS zulässig ist, und daher läuft der Prozess 400 direkt zu der Übergangsstelle A, woraufhin die mit Schritt 420 beginnenden Abläufe erneut durchlaufen werden, bis der Prozess über die Übergangsstelle B einmal endet.

Anhand eines Ablaufdiagramms in Fig. 6 wird nun ein Prozess 600 zur Bestimmung einer Mindest-Anwendungssicherheit MAS einer Anwendung in dem Endgerät 104 beschrieben als ein Ausführungsbeispiel der vorliegenden Erfindung. Als Mindest-Anwendungssicherheit MAS ist dabei eine Sicherheitsstufe zu verstehen, die erforderlich ist, um eine Anwendung in dem Endgerät 104 zu aktivieren.

Nach Beginn (Aufruf) des Prozesses 600 wird in Schritt 610 eine Anwendung erkannt. Danach werden in Schritt 620 Metadaten ausgewertet. Die Metadaten sind einerseits Metadaten, die der Anwendung direkt zugeordnet sind, wie etwa die Metadaten 213 oder 223 in Fig. 2, oder allgemein gültige Metadaten, wie etwa die Vorbelegten Metadaten 230 in Fig. 2. Die Metadaten werden über den MDM/Policy-Agenten 264 (Fig. 2) von dem MDM-Server 110, insbesondere zum Anlauf einer Anwendung / von Anwendungen auf dem Endgerät 104, abgefragt oder vom Sicheren Applikationsstarter 250 (Fig. 2) direkt erhalten, insbesondere zur Laufzeit, auch Real Time Betrieb genannt, einer oder mehrerer Anwendungen auf dem Endgerät (104).. Anhand der Metadaten wird dann in Schritt 630 die Mindestsicherheit der Anwendung MAS bestimmt, und der Prozess 600 endet, in dem die Mindest-Anwendungssicherheit MAS als Ausgangsparameter übergeben wird.

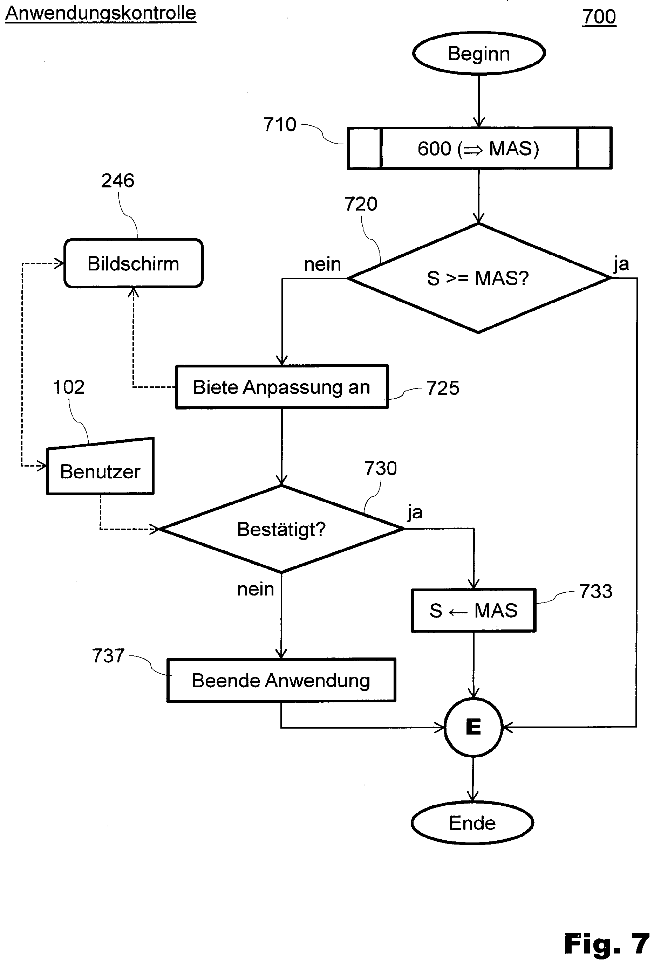

Anhand eines Ablaufdiagramms in Fig. 7 wird nun ein Prozess 700 zur Kontrolle einer Anwendung in dem Endgerät 104 als ein Ausführungsbeispiel der vorliegenden Erfindung beschrieben. Der Prozess 700 wird beispielsweise für jede Anwendung aufgerufen, wenn eine Einstellung oder Änderung der gegenwärtigen Sicherheit S erfolgt ist.

Nach Beginn (Aufruf) des Prozesses 700 wird in Schritt 710 der Prozess 600 aufgerufen, um die Mindest-Anwendungssicherheit MAS der Anwendung zu erhalten. Danach wird in Schritt 720 festgestellt, ob die gegenwärtige Sicherheit S größer oder gleich der Mindest-Anwendungssicherheit MAS ist. Wenn die Feststellung in Schritt 720 positiv ist (ja), bedeutet dies, dass die gegenwärtige Sicherheit S für den Ablauf der Anwendung ausreicht, und der Prozess führt zu einer Übergangsstelle E, woraufhin der Prozess 700 endet. Falls die Feststellung in Schritt 720 negativ ist (nein), wird in Schritt 725 eine Anpassung der gegenwärtigen Sicherheit S auf die Mindest-Anwendungssicherheit MAS angeboten, indem ein entsprechendes Dialogfeld auf dem Bildschirm 246 angezeigt wird. Danach wird in Schritt 730 festgestellt, ob der Benutzer 102 die Anpassung bestätigt hat oder nicht. Wenn die Feststellung in Schritt 730 positiv ist (ja), wird in Schritt 733 die gegenwärtige Sicherheit S auf den Wert der Mindest-Anwendungssicherheit MAS angehoben, und der Prozess führt zu der Übergangsstelle E, woraufhin der Prozess 700 endet. Falls die Feststellung in Schritt 730 negativ ist (nein), wird in Schritt 737 die Anwendung beendet, und der Prozess führt zu der Übergangsstelle E, woraufhin der Prozess 700 endet. Die Beendigung der Anwendung in Schritt 737 kann einen Hinweis an den Benutzer 102 über den Bildschirm 246 beinhalten.

Es ist festzuhalten, dass in dem Prozess 700 kein Vergleich mit der Basis-Sicherheit BS erfolgt, da die gegenwärtige Sicherheit S nie kleiner als die Basis-Sicherheit BS sein kann (vgl. beispielsweise den Prozess 400 in Fig. 4). Eine ungewollte Absenkung der gegenwärtigen Sicherheit S unter die Basis-Sicherheit BS kann nicht geschehen, da eine Anpassung der gegenwärtigen Sicherheit S nur dann angeboten wird, wenn die Mindest-Anwendungssicherheit MAS größer als die gegenwärtige Sicherheit S ist, also stets mit einer Anhebung der gegenwärtigen Sicherheit S einhergeht.

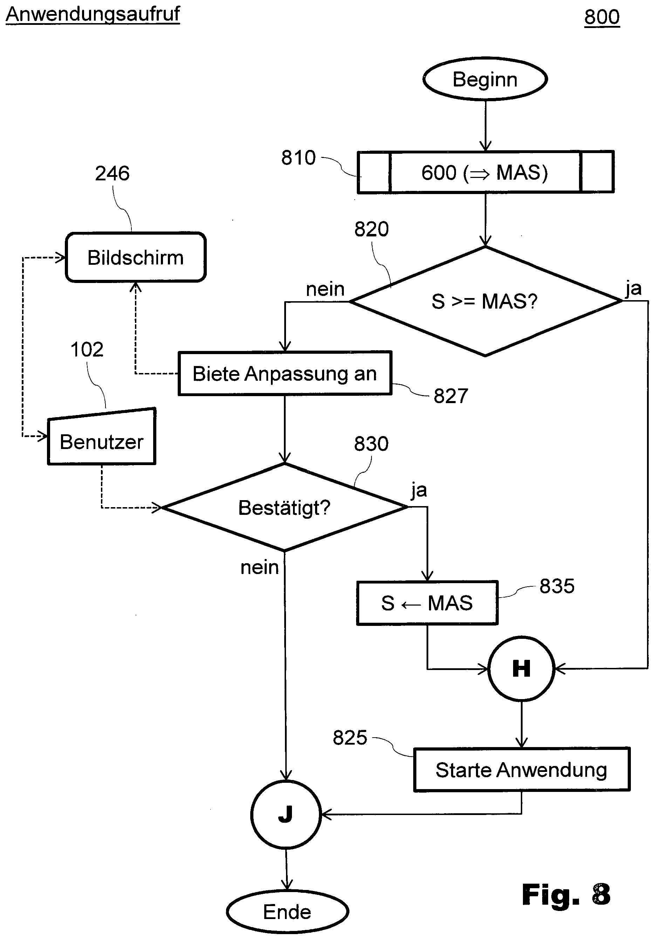

Anhand eines Ablaufdiagramms in Fig. 8 wird nun ein Prozess 800, der bei einem Aufruf einer Anwendung in dem Endgerät 104 aufgerufen wird, als ein Ausführungsbeispiel der vorliegenden Erfindung beschrieben.

Nach Beginn (Aufruf) des Prozesses 800 wird in Schritt 810 der Prozess 600 aufgerufen, um die Mindest-Anwendungssicherheit MAS der Anwendung zu erhalten. Danach wird in Schritt 820 festgestellt, ob die gegenwärtige Sicherheit S größer oder gleich der Mindest-Anwendungssicherheit MAS ist. Wenn die Feststellung in Schritt 820 positiv ist (ja), bedeutet dies, dass die gegenwärtige Sicherheit S für den Ablauf der Anwendung ausreicht, und der Prozess führt zu einer Übergangsstelle H, woraufhin in Schritt 825 die Anwendung gestartet wird bzw. der Aufruf der Anwendung freigegeben wird. Danach führt der Prozess zu einer Übergangsstelle J, woraufhin der Prozess 800 endet. Falls die Feststellung in Schritt 820 negativ ist (nein), wird in Schritt 827 eine Anpassung der gegenwärtigen Sicherheit S auf die Mindest-Anwendungssicherheit MAS angeboten, indem beispielsweise ein entsprechendes Dialogfeld auf dem Bildschirm 246 angezeigt wird. Danach wird in Schritt 830 festgestellt, ob der Benutzer 102 die Anpassung bestätigt hat oder nicht. Wenn die Feststellung in Schritt 830 positiv ist (ja), wird in Schritt 835 die gegenwärtige Sicherheit S auf den Wert der Mindest-Anwendungssicherheit MAS angehoben, und der Prozess führt über die Übergangsstelle H zu Schritt 825, um den - nach Anpassung der gegenwärtigen Sicherheit S zulässigen - Start der Anwendung zu veranlassen, woraufhin der Prozess 800 nach Durchlaufen der weiteren Übergangsstelle J endet. Falls die Feststellung in Schritt 830 negativ ist (nein), läuft der Prozess direkt zu der Übergangsstelle J, woraufhin der Prozess 800 endet, wobei der Start der Anwendung nicht erfolgt, da die gegenwärtige Sicherheit S zu gering im Vergleich mit der Mindest-Anwendungssicherheit MAS ist.

Es ist festzuhalten, dass in dem Prozess 800 kein Vergleich mit der Basis-Sicherheit BS erfolgt, da die gegenwärtige Sicherheit S nie kleiner als die Basis-Sicherheit BS sein kann (vgl. vorstehende Erläuterung zu Prozess 700).

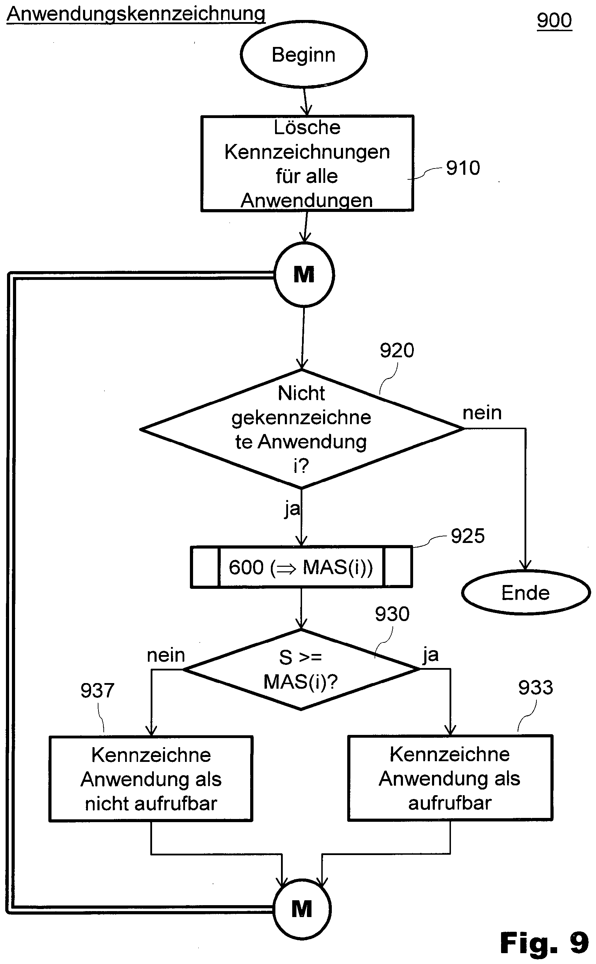

Anhand eines Ablaufdiagramms in Fig. 9 wird nun ein Prozess 900 zur Anwendungskennzeichnung, der bei unterschiedlichen Gelegenheiten in dem Endgerät 104 aufgerufen werden kann, als ein Ausführungsbeispiel der vorliegenden Erfindung beschrieben. Beispielsweise kann der Prozess beim Hochfahren des Endgeräts 104, bei Neuinstallation einer Anwendung, bei Änderung der Sicherheitsparameter etc. oder standardmäßig im regelmäßigen Turnus aufgerufen werden.

Nach Beginn (Aufruf) des Prozesses 900 werden in Schritt 910 eventuell vorhandene Kennzeichnungen für alle Anwendungen gelöscht. Danach schreitet der Prozess über eine Übergangsstelle M zu Schritt 920, in welchem festgestellt wird, ob es eine nicht gekennzeichnete Anwendung gibt oder nicht. Diese Anwendung erhält die vorübergehende Bezeichnung "i". Im Rahmen der hier beschriebenen Prozesse meint eine Kennzeichnung einer Anwendung stets eine Kennzeichnung hinsichtlich der Ausführbarkeit der Anwendung im Sinne des Kennzeichnungselements 522 in Fig. 5, sofern nichts anderes gesagt ist. Falls die Feststellung in Schritt 920 negativ ist (nein), bedeutet dies, dass keine Anwendungen (mehr) zu markieren sind, und daher endet der Prozess 900. Wenn die Feststellung in Schritt 920 positiv ist (ja), wird in Schritt 925 der Prozess 600 aufgerufen, um die Mindest-Anwendungssicherheit MAS der Anwendung i zu erhalten. Danach wird in Schritt 930 festgestellt, ob die gegenwärtige Sicherheit S größer oder gleich der Mindest-Anwendungssicherheit MAS der Anwendung i ist. Wenn die Feststellung in Schritt 930 positiv ist (ja), bedeutet dies, dass die gegenwärtige Sicherheit S für den Ablauf der Anwendung ausreicht, und der Prozess führt zu Schritt 933, in welchem die Anwendung i als aufrufbar gekennzeichnet wird. Danach führt der Prozess zu einer Übergangsstelle M, um von dort aus, beginnend mit Schritt 920, zu prüfen, ob es noch (weitere) nicht gekennzeichnete Anwendungen gibt (siehe oben). Falls die Feststellung in Schritt 930 negativ ist (nein), wird in Schritt 937 die Anwendung i als nicht aufrufbar gekennzeichnet, woraufhin der Prozess ebenfalls wieder zu der Übergangsstelle M führt, um von dort aus, beginnend mit Schritt 920, zu prüfen, ob es noch (weitere) nicht gekennzeichnete Anwendungen gibt (siehe oben). Es ist ersichtlich, dass der Prozess 900 nur dann beendet (verlassen) wird, wenn es keine nicht gekennzeichneten Anwendungen mehr gibt (nein in Schritt 920).

Es ist festzuhalten, dass die Kennzeichnung der Anwendungen als aufrufbar oder nicht aufrufbar mit einem entsprechenden Kennzeichnungselement 522 nur die Anzeige auf dem Gerätebildschirm 246 betrifft. Bei Aufruf der Anwendung wird aus Sicherheitsgründen stets der Prozess 800 zum Anwendungsaufruf gestartet, bei welchem - Unabhängig von dem Kennzeichnungselement 522 - die Sicherheitseinstellungen für die Anwendung überprüft werden. Alternativ ist ein Regime derart denkbar, dass die Kennzeichnung der Anwendungen in Prozess 900 nicht nur die Bildschirmdarstellung betrifft, sondern auch eine Markierung in einer in einem geschützten Speicherbereich abgelegten Liste umfasst, die bei Aufruf einer Anwendung lediglich abgefragt wird.

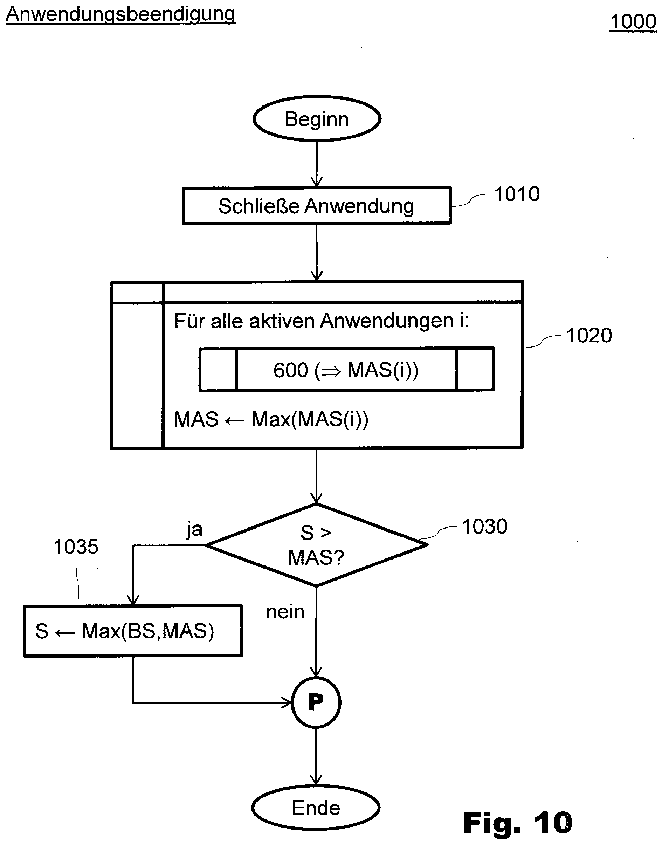

Anhand eines Ablaufdiagramms in Fig. 10 wird nun ein Prozess 1000, der bei einer Beendigung einer Anwendung in dem Endgerät 104 aufgerufen wird, als ein Ausführungsbeispiel der vorliegenden Erfindung beschrieben.

Nach Beginn (Aufruf) des Prozesses 1000 wird in Schritt 1010 die betreffende Anwendung geschlossen. Danach schreitet der Prozess über eine Übergangsstelle M zu einer Schleife 1020 fort, in welcher für alle aktiven Anwendungen i der Prozess 600 zur Ermittlung der (individuelle) Mindest-Anwendungssicherheit der Anwendung i aufgerufen und einer (globalen) Mindest-Anwendungssicherheit die größte (höchste) der ermittelten Mindest-Anwendungssicherheiten MAS(i) der einzelnen Anwendungen i zugewiesen wird. Dann wird in Schritt 1030 festgestellt, ob die (universelle) Mindest-Anwendungssicherheit größer als die gegenwärtige Sicherheit S ist oder nicht. Wenn die Feststellung in Schritt 1030 positiv ist (ja), bedeutet dies, dass keine der gegenwärtig aktiven Anwendungen eine höhere Sicherheitsstufe erfordert als die gegenwärtige Sicherheit S. Daher führt in diesem Fall der Prozess führt zu Schritt 1035, in welchem die gegenwärtige Sicherheit auf die höchste Mindest-Anwendungssicherheit, aber nicht tiefer als die Basis-Sicherheit, abgesenkt wird. Auf diese Weise wird sichergestellt, dass kein höheres Sicherheitsprofil vorherrscht als für die Ausführung laufender Anwendungen unbedingt erforderlich. Danach führt der Prozess zu einer Übergangsstelle P, zu welcher auch der negative Zweig von Schritt 1030 führt (nein), und der Prozess 1000 wird beendet.

Da die Ausführung des Prozesses 1000 einen Eingriff in die persönlichen Präferenzen des Benutzers 102 des Endgeräts 104 ermöglicht, können die Schritte 1020 bis 1035 im Prozess 1000 als optionales (vom Benutzer abwählbares) Feature ausgestaltet sein.

Anhand eines Ablaufdiagramms in Fig. 11 wird nun ein Prozess 1100, der einen Gesamtablauf des Agenteneingriffs darstellt, als ein Ausführungsbeispiel der vorliegenden Erfindung beschrieben.

Nach Beginn (Aufruf) des Prozesses 1100 wird in Schritt 1110 das System initialisiert, indem der gegenwärtigen Sicherheit S der Wert (das Profil) einer vom Endgerät voreingestellten Default-Sicherheit DS zugewiesen wird. Danach führt der Prozess zu einer Übergangsstelle T, die als Beginn einer Hauptschleife des Prozesses 1100 verstanden werden kann. Die mit der Übergangsstelle T beginnende Hauptschleife wird immer wieder durchlaufen, bis das System heruntergefahren wird.

Nach der Übergangsstelle T wird in Schritt 1115 der Prozess 300 aufgerufen, um die Basis-Sicherheit zu bestimmen. Daraufhin wird in Schritt 1120 festgestellt, ob die gegenwärtige Sicherheit S größer oder gleich der Basis-Sicherheit BS ist. Wenn die Feststellung in Schritt 1120 positiv ist (ja), bedeutet dies, dass die gegenwärtige Sicherheit S in Bezug auf die Basis-Sicherheit BS ausreichend ist, und der Prozess schreitet zu einer Übergangsstelle U fort. Falls die Feststellung in Schritt 1120 negativ ist (nein), wird in dem folgenden Schritt 1125 der gegenwärtigen Sicherheit S der Wert der Basis-Sicherheit BS zugewiesen, und dann führt der Prozess zu der Übergangsstelle U. Danach schreitet der Prozess zu einer Schleife in Schritt 1128 fort, in welcher für alle laufenden Anwendungen i der Prozess 700 aufgerufen wird. Gemäß vorstehender Beschreibung wird in dem Prozess 700 jeweils kontrolliert, ob die gegenwärtige Sicherheit für die Ausführung der jeweiligen Anwendung ausreicht, und gegebenenfalls eine Anpassung der gegenwärtigen Sicherheit S angeboten. Falls vom Benutzer des Endgeräts 104 keine Anpassung der gegenwärtigen Sicherheit S akzeptiert wird, wird die jeweilige Anwendung geschlossen. Nach Abarbeitung der Schleife in Schritt 1128 wird in Schritt 1130 der Prozess 900 aufgerufen, um alle verfügbaren Anwendungen hinsichtlich ihrer Ausführbarkeit im Rahmen der gegenwärtigen Sicherheit S zu kennzeichnen.

Danach wird in Schritt 1140 festgestellt, ob der Benutzer 102 mittels einer Benutzer-Interaktion eine Anpassung der gegenwärtigen Sicherheit S angefordert hat. Wenn die Feststellung in Schritt 1140 positiv ist (ja), wird in Schritt 1145 der Prozess 400 zur Anpassung der gegenwärtigen Sicherheit S aufgerufen, und danach führt der Prozess zu der Übergangsstelle T, um die Hauptschleife des Prozesses 1100 erneut zu beginnen. Falls die Feststellung in Schritt 1140 negativ ist (nein), wird in dem folgenden Schritt 1150 festgestellt, ob der Benutzer 102 mittels einer Benutzer-Interaktion eine Anwendung aufgerufen hat. Wenn die Feststellung in Schritt 1150 positiv ist (ja), wird in Schritt 1155 der Prozess 800 zum sicheren Starten der Anwendung aufgerufen, und danach führt der Prozess zu der Übergangsstelle T, um die Hauptschleife des Prozesses 1100 erneut zu beginnen. Falls die Feststellung in Schritt 1150 negativ ist (nein), wird in dem folgenden Schritt 1160 festgestellt, ob der Benutzer 102 mittels einer Benutzer-Interaktion eine Anwendung beendet hat. Wenn die Feststellung in Schritt 1160 positiv ist (ja), wird in Schritt 1165 der Prozess 1000 zur Beendigung der Anwendung aufgerufen, und danach führt der Prozess zu der Übergangsstelle T, um die Hauptschleife des Prozesses 1100 erneut zu beginnen. Falls die Feststellung in Schritt 1160 negativ ist (nein), wird in dem folgenden Schritt 1170 festgestellt, ob der Benutzer 102 mittels einer Benutzer-Interaktion eine Abmeldung des Endgeräts 104 eingeleitet hat. Wenn die Feststellung in Schritt 1170 positiv ist (ja), wird in Schritt 1175 das System getrennt, d.h., das Herunterfahren des Systems eingeleitet, und danach endet der Prozess 1100. Falls die Feststellung in Schritt 1170 negativ ist (nein), führt der Prozess zu der Übergangsstelle T, um die Hauptschleife des Prozesses 1100 erneut zu beginnen.

Da nach der Übergangsstelle T die Hauptschleife des Prozesses 1100 immer wieder mit der Bestimmung der Basis-Sicherheit BS in Schritt 1115 beginnt, kann einer Änderung der Einsatzbedingungen jederzeit Rechnung getragen werden. Obschon in der Figur nicht dargestellt, kann, wenn sich die Basis-Sicherheit BS erhöht oder erniedrigt, eine Meldung an den Benutzer 102 des Endgeräts 104 erfolgen, sodass der Benutzer 102 stets Kenntnis von der gegenwärtig geforderten Sicherheit hat und sich darauf einstellen kann.

In vorstehender Beschreibung eines Gesamtprozesses 1100 in Fig. 11 und zugehöriger Subroutinen als Prozesse 300, 400, 600, 700, 800, 900, 1000 in Fign. 3 bis 10 wurde von Anwendungen gesprochen. Es versteht sich, dass der allgemeine Begriff der Anwendung auch Gerätefunktionen wie etwa Aufzeichnungs-, Wiedergabe-, Kommunikationsfunktionen etc. umfassen kann, die in gleicher bzw. analoger Weise wie vorstehend beschrieben behandelt und so dem vorgegebenen Sicherheitsregime unterworfen werden können.

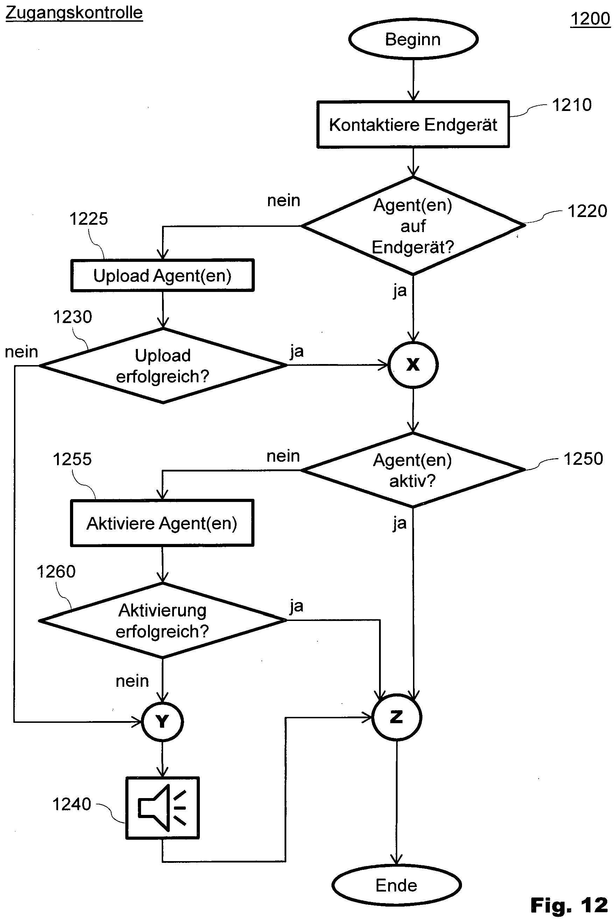

Anhand eines Ablaufdiagramms in Fig. 12 wird nun ein Prozess 1200, der eine Zugangskontrolle zu einem durch die auf dem Endgerät 104 aktiven Agenten überwachten Bereich darstellt, als ein Ausführungsbeispiel der vorliegenden Erfindung beschrieben. Der Prozess 1200 wird durch eine Sicherheitseinrichtung wie etwa dem MDM-Server 110 (Fig. 1) verarbeitet und von einer Überwachungsschleife eines übergeordneten Prozesses immer dann aufgerufen, wenn ein Endgerät geortet wurde. Für die weitere Beschreibung wird davon ausgegangen, dass das Endgerät 104 (Fign. 1, 2) geortet wurde.

Nach Beginn (Aufruf) des Prozesses 1200 wird in Schritt 1210 das geortete Endgerät 104 kontaktiert, d.h., eine Kommunikationsverbindung 112 (Fig. 1) aufgebaut. Die Kommunikationsverbindung 112 muss für den Benutzer 102 des Endgeräts nicht erkennbar sein, kann es aber. Daraufhin wird in Schritt 1220 festgestellt, ob die erforderlichen Agenten zur Durchführung der Prozesse 400, 600 bis 1100 auf dem Endgerät 104 installiert sind oder nicht. Wenn die Feststellung in Schritt 1220 positiv ist (ja), schreitet der Prozess zu einer Übergangsstelle X fort. Falls die Feststellung in Schritt 1220 negativ ist (nein), wird in dem folgenden Schritt 1225 versucht, den/die erforderlichen Agenten auf das Endgerät 104 zu laden (upload). Danach wird in Schritt 1230 festgestellt, ob der Upload des/der Agenten erfolgreich war oder nicht. Wenn die Feststellung in Schritt 1230 positiv ist (ja), schreitet der Prozess zu der Übergangsstelle X fort. Falls die Feststellung in Schritt 1230 negativ ist (nein), schreitet der Prozess zu einer Übergangsstelle Y fort, woraufhin in Schritt 1240 eine Warnung ausgegeben wird. Danach führt der Prozess zu einer Übergangsstelle Z, woraufhin der Prozess 1200 endet.

Von der Übergangsstelle X aus, die erreicht wird, wenn der/die erforderliche(n) Agent(en) auf dem Endgerät 104 installiert ist/sind bzw. erfolgreich geladen wurde(n), führt der Prozess zu Schritt 1250, in welchem festgestellt wird, oder der/die Agent(en) aktiv ist/sind oder nicht. Wenn die Feststellung in Schritt 1250 positiv ist (ja), schreitet der Prozess zu der Übergangsstelle Z fort, und der Prozess endet. Falls die Feststellung in Schritt 1250 negativ ist (nein), wird in Schritt 1255 versucht, den/die Agenten auf dem Endgerät 104 zu aktivieren. In dem nachfolgenden Schritt 1260 wird festgestellt, ob die Aktivierung des/der Agenten erfolgreich war. Wenn die Feststellung in Schritt 1260 positiv ist (ja), schreitet der Prozess zu der Übergangsstelle Z fort, und der Prozess endet. Falls die Feststellung in Schritt 1260 negativ ist (nein), schreitet der Prozess über die Übergangsstelle Y zu Schritt 1240 fort, um eine Warnung auszugeben. Optional begleitet von einem akustischen und / oder optischen Signal konnte ein Popup und / oder ein Eintrag in der Aktivitätenliste des mobilen Gerätese erfolgen. Außerdem wird daraufhin beispielsweise die unterste Sicherheitsstufe "private don't care" eingenommen und die Anwendungen, die somit von der Ausführung ausgeschlossen werden, in ihren Anwendungs-Icons 520 mit einem entsprechenden Markierungselement 522 markiert. Danach führt der Prozess zu einer Übergangsstelle Z, woraufhin der Prozess 1200 endet.

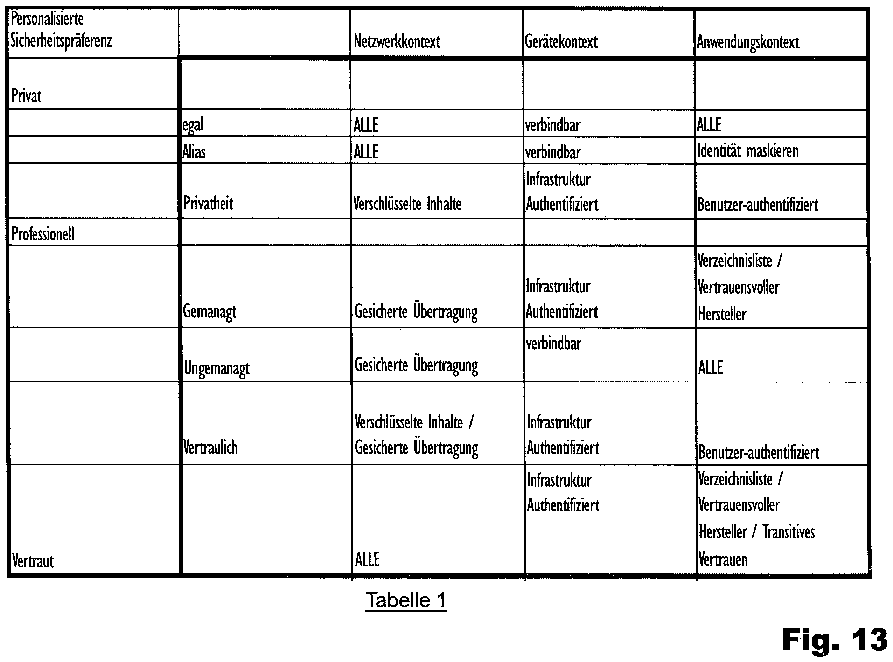

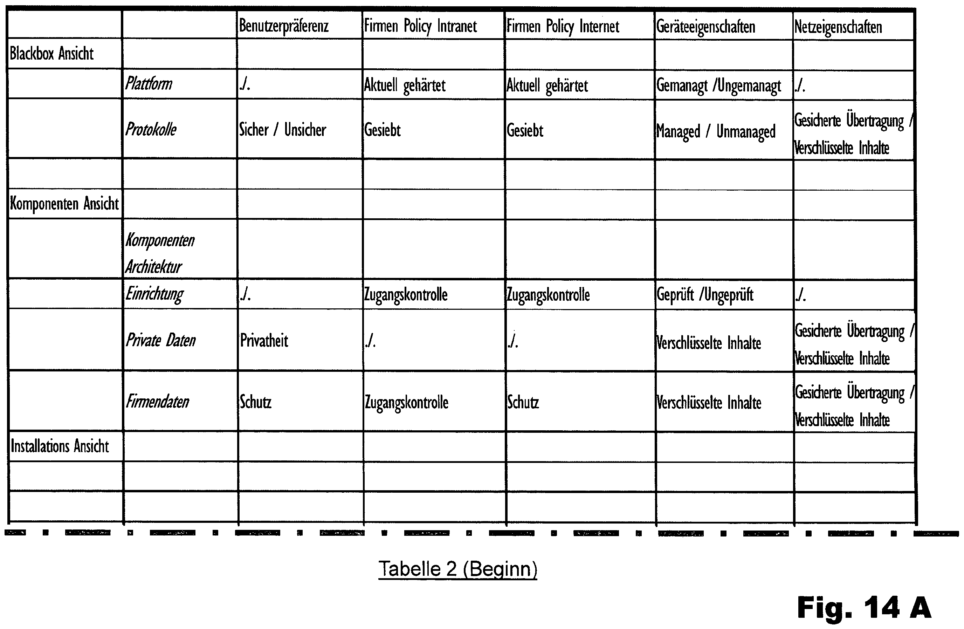

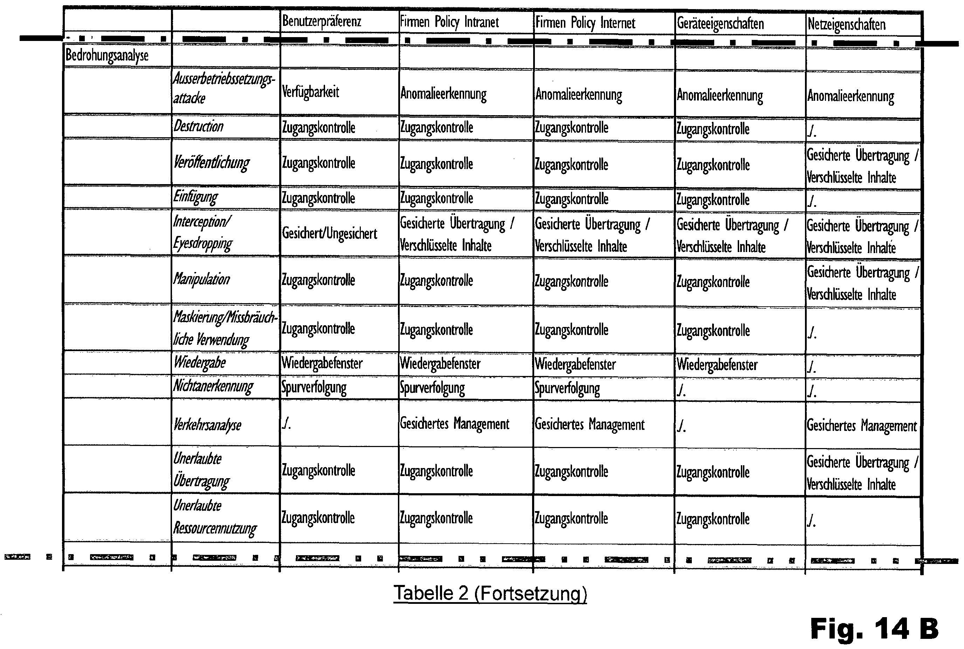

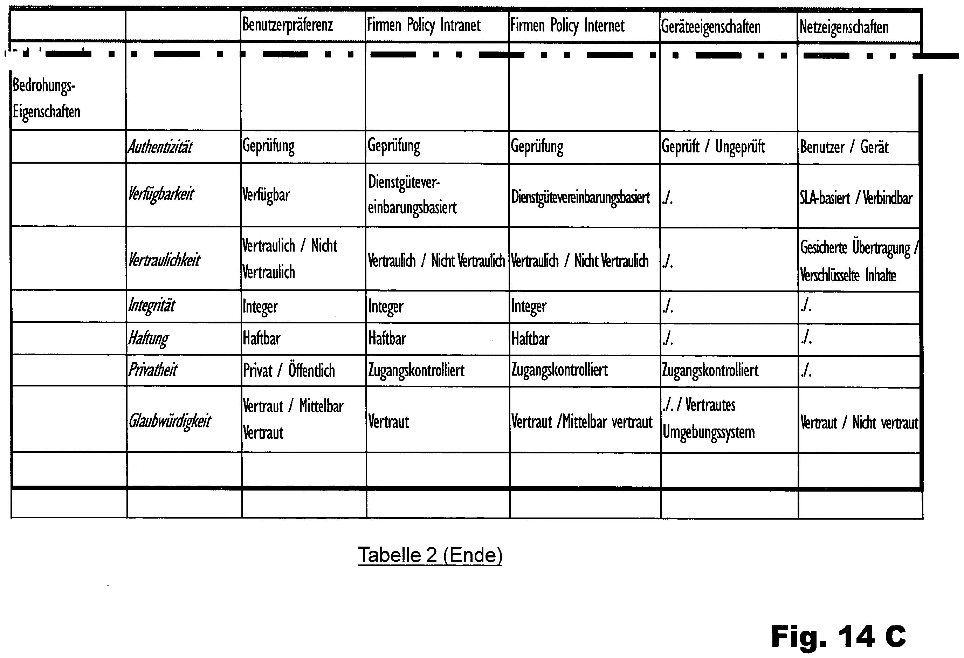

Fig. 13 zeigt anhand einer Tabelle 1 eine Matrix von Sicherheitsprofilen, und Fign. 14 bis 14C zeigen anhand einer mehrteiligen Tabelle 2
Aspekte und Sichten einer beispielhaften Sicherheitsbewertung (Technical Security Assessments) gemäß der Erfindung. Für mobile Szenarien ergaben sich hier technische Erfordernisse aus Sicht der Geräte-, Netzwerk-, und Firmen-Policy Inter- und Intranet Eigenschaften. Diesen Erfordernissen wird über entsprechende Sicherheitstechnologien Rechnung getragen. Die Tabellen 1, 2 oder ähnliche Tabellen können von den Agenten auf dem Endgerät 104 zur Durchführung der vorstehend beschriebenen Prozesse verwendet werden.

Zur kontextabhängigen, automatisierten Einstellung der Sicherheitsstufe (gegenwärtige Sicherheit S) auf dem Endgerät 104 befinden sich gemäß der Darstellung in Fig. 2 erfindungsgemäß Agenten, die jeweils den aktuellen Status bzgl. der Geräte-, Netzwerk-, und Firmen-Policy Inter- und Intranet Eigenschaften erfassen. Die Agenten (insbesondere Geräteagent 260) können dabei wiederum Ortsinformationen oder drahtlose Sensoren zur Ermittlung ihres Status einbeziehen. Der Netzwerkagent 262 steuert entsprechend den (sicheren) Netzzugang.

Geschäftliche Anwendungen auf dem Endgerät sind erfindungsgemäß mit Metadaten in gesicherter Form angereichert, z.B. Checksum. Diese Metadaten definieren mindestens die Mindest-Sicherheitsstufe (Basis-Sicherheit BS) und Authentizitäts- und Zugangserfordernisse für den Ablauf der konkreten Anwendung (Mindest-Anwendungssicherheit MAS). Bei gemanagten Endsystemen können diese Metadaten beispielsweise mit Mobile Device Management (MDM) Systemen bereitgestellt werden oder diese werden bereits in den Anwendungen mitgeliefert. Andere Anwendungen werden abhängig vom Typ (z.B. Web-Anwendung) oder Herkunft (Trusted /Untrusted Application Store) mit Default-Metadaten automatisiert versorgt.

Dem Endgerät 104 wird automatisiert eine Sicherheitsstufe mit einem Basisgestaltungsprofil (Basis-Sicherheit BS) hinsichtlich der Geräte-, Netzwerk-, und Firmen-Policy Inter- und Intranet Eigenschaften zugeordnet. Die Basis-Sicherheit BS kann die Werte annehmen:
- Privat
- Professionell
- Vertrauenswürdig (engl.: trusted)

Unterschiedliche Gestaltungsprofile (gegenwärtige Sicherheit S) ergeben sich erfindungsgemäß, wenn der Benutzer seine Präferenz am Endgerät beeinflussen kann und er über den aktuellen Kontext informiert ist. Erfindungsgemäß kann der Benutzer die automatisiert identifizierte Sicherheitsstufe situativ noch wie folgt anpassen:
- Private:
   Don't care, Alias, oder Privatheit (engl.: private)
- Professionell:
   Gemanaged, Ungemanaged und Vertraulich (engl.: confidential)

Bei Alias wird die Identität des Benutzer bewusst durch Verwendung eines Aliases verschleiert. Bei Auswahl dieser Stufe wählt der Benutzer mindestens ein Alias für die nachfolgende Verwendung von Applikationen aus.

Managed/Unmanaged ist hier als alternativ zu betrachten in Abhängigkeit ob das mobile Endgerät gemanagt und ungemanagt ist. Gemanagt heißt in diesem Zusammenhang, dass Firmen-Policies auf dem Endgerät erzwungen werden.

Wenn der Benutzer das Endgerät einschaltet oder aufweckt, wird dem Benutzer erfindungsgemäß die automatisiert eingestellte Sicherheitsstufe angezeigt (Fig. 5) und er/sie kann diese noch an seine/ihre Präferenz über die Gestaltungsprofile anpassen (vgl. Prozess 400 in Fig. 4).

Werden in der Folge vom Benutzer Anwendungen gestartet (vgl. Prozess 800 in Fig. 8), vergleicht das erfindungsgemäße System auf dem Endgerät die Kompatibilität von Mindestanforderungen der Anwendungs-Metadaten (Mindest-Anwendungssicherheit MAS) mit der von den Agenten jeweils festgestellten Status (gegenwärtige Sicherheit S). Vorteilhaft werden den Applikations-Ikonen (520 in Fig. 5) ein Zusatzinformationselement (522 in Fig. 5) hinzugefügt, die den aktuellen Status bezogen auf die aktuelle eingestellte Stufe darstellen (vgl. Prozess 900 in Fig. 9): beispielsweise ein rotes Element deutet an, dass die Sicherheitsstufe unzureichend ist, während grün eine ausreichende Sicherheitsstufe signalisiert. Bei Konformität wird die Anwendung ohne Benutzerinteraktion gestartet. Ansonsten wird dem Benutzer eine konforme Sicherheitsstufe angeboten und bei Anwahl entsprechenden Sicherheitstechnologien aktiviert und dann die Anwendung gestartet.

Durch die automatisch gewählte Sicherheitsstufe werden Konflikte mit im Hintergrund oder parallel laufendenen Applikationen erzeugt, werden diese vom System automatisiert oder nach Benutzerinteraktion geschlossen, bevor die Stufe angewendet wird (vgl. Prozess 700 in Fig. 7).

Umgekehrt kann nach Schließen einer Anwendung automatisch geprüft werden, ob eine niedrigere Sicherheitsstufe für die verbleibenden aktiven Anwendungen ausreicht und diese dann automatisch eingenommen (vgl. Prozess 1000 in Fig. 10).

Die erfindungsgemäße situative Sicherheitslösung wendet sich an den Anwender 102 eines mobilen Endgerätes 104 (Fig. 1). Das Endgerät kann optional über ein MDM (MDM-Server 110) gemanagt sein. Die Identität des Benutzers 102 kann durch ein Identity Management System (Identitätsmanagement-Server 120) festgestellt und entsprechende Zugangsberechtigungen zu Intra- oder Extranet Applikationen und-daten zuteilen. Zusätzlich kann das Endgerät Web-Anwendungen oder Applikationen aus Trusted-/Untrusted Application Stores (Webdienste-Server 150, 160) herunterladen und verwenden. Bei Web-Anwendungen, die wiederum andere Web-Anwendungen nutzen sollten diese über Transitive Trust Beziehungen eingebunden sein und die aufrufende Anwendung dies auch propagieren können.

Die Erfindung erlaubt mit einer einfachen Benutzerschnittstelle die automatisierte Einstellung einer dem Kontext angemessenen Sicherheitsstufe auf mobilen Endgeräten, die kompatibel mit aktuellen Sicherheitserfordernissen ist. Der Benutzer kann die automatisch gewählte Sicherheitsstufe über die Gestaltungsprofile noch beeinflussen, aber dabei nicht die Mindestanforderungen an die Sicherheit aushebeln. Dem Benutzer wird eine visuelle Anzeige der Sicherheitsstufe und die Kompatibilität mit der gewählten Anwendung angeboten.

Da sich die Sicherheitsstufe im erfindungsgemäßen System über die Zeit ändert, ist es sinnvoll, die angewandte Sicherheitsstufe dem Benutzer visuell darzustellen und somit Sicherheitsbewusstsein beim Benutzer zu schaffen.

Zusammengefasst wurde ein Verfahren (und ein mobiles Endgerät) für mobile Anwendungen mit mindestens einem Anwender beschrieben, bei dem:
a) eine initiale Sicherheitsstufe (Default-Sicherheit) automatisch eingestellt wird,
b) die aktuell erforderliche Sicherheitsstufe (gegenwärtige Sicherheit) durch Kontextinformationen automatisch eingestellt werden kann,
c) die mindestens erforderliche Sicherheitsstufe (Basis-Sicherheit) durch Policies erzwungen werden kann,
d) durch den Benutzer die erforderliche Sicherheitsstufe noch ausgestaltet bzw. angepasst werden kann,
e) bei Starten einer Anwendung die Kompatibilität der Anwendung mit der Sicherheitsstufe geprüft werden kann,
f) laufende nicht kompatible Anwendungen bei Änderung der Sicherheitsstufe automatisch geschlossen werden,
g) die Kompatibilitätseigenschaft der Anwendung mit der Sicherheitsstufe beispielsweise in der Auswahl angezeigt wird,
h) die automatisiert eingestellte Sicherheitsstufe dem Benutzer angezeigt wird,
wobei die Einhaltung der mindestens erforderliche Sicherheitsstufe nicht unterschritten werden kann.

Die Erfindung ist ausschließlich durch die beigefügten Ansprüche definiert und kann sich auf einzelne oder beliebige Kombinationen der beschriebenen Merkmale beziehen.

Die unter Bezug auf die dargestellten Ausführungsformen beschriebenen Merkmale der Erfindung können auch bei anderen Ausführungsformen der Erfindung vorhanden sein, außer wenn es anders angegeben ist oder sich aus technischen Gründen von selbst verbietet.

### Liste der Bezugszeichen und Symbole

- 100: Kommunikationssystem
- 102: Person/Benutzer
- 104: Mobiles Endgerät
- 106: Benutzer-Interaktion
- 110: MDM-Server
- 112: Funkverbindung
- 120: Identitätsmanagement-Server
- 122: Benutzer-Interaktion
- 130: Anwendungs-Server
- 132: Funkverbindung
- 140: Internet/Intranet
- 144: Netzwerkverbindung
- 150: Webdienste-Server
- 160: Webdienste-Server (referenziert)
- 170: Medien-Streaming-Server
- 180: Web-Anwendungs-Server
- 210: Anwendungsablage
- 212: Firmenanwendung
- 213: Metadaten
- 214: Öffentliche Anwendung
- 220: Web-Anwendungs-Ablage
- 222: Firmen-URL
- 223: Metadaten
- 224: Öffentliche URL
- 230: Vorbelegte Metadaten
- 240: GPS/WLAN-Positionierungseinheit
- 242: Sensor-Aufnahmeeinheit
- 244: Netzwerk-Schnittstelle
- 246: Gerätebildschirm
- 248: https/TSL/VPN-Schnittstelle
- 250: Sicherer Anwendungsstarter
- 260: Geräte-Agent
- 262: Netzwerk-Agent
- 264: MDM-/Policy-Agent
- 270: Benutzer-Interaktions-Schnittstelle (UII)
- 300: Prozess zur Automatischen Sicherheitseinstellung
- 310-3xx: Prozess-Schritte
- 400: Prozess zur Manuellen Sicherheitsanpassung
- 410-4xx: Prozess-Schritte
- 500: Bildschirm-Darstellung
- 510: Darstellung der Sicherheitseinstellungen
- 520: Anwendungs-Icon
- 522: Kennzeichnungselement der Ausführbarkeit
- 600: Teilprozess zur Mindest-Anwendungssicherheit
- 610-6xx: Prozess-Schritte
- 700: Prozess zur Anwendungskontrolle
- 710-7xx: Prozess-Schritte
- 800: Prozess zum Anwendungsaufruf
- 810-8xx: Prozess-Schritte
- 900: Prozess zur Anwendungskennzeichnung
- 910-9xx: Prozess-Schritte
- 1000: Prozess zur Anwendungskennzeichnung
- 1010-10xx: Prozess-Schritte
- 1100: Prozess zur Handhabung von Sicherheitseinstellungen
- 1110-11 xx: Prozess-Schritte
- 1200: Prozess zur Zugangskontrolle
- 1210-12xx: Prozess-Schritte
- i: Zähler
- A, B, E, J, H, M, P, T, U, X, Y, Z: Übergangsstellen im Prozessablauf
- BS: Basis-Sicherheit
- MAS: Mindest-Anwendungssicherheit
- S: Gegenwärtige Sicherheit (Sicherheitsprofil)
- S1, ..., S6: Mögliche Stufen der gegenwärtigen Sicherheit
- USS: Benutzerselektierte Sicherheit (temporär)

Die vorstehende Liste ist integraler Bestandteil der Beschreibung.

## Patentansprüche

1. Verfahren zur Handhabung von Sicherheitseinstellungen eines mobilen Endgeräts (104), mit den Schritten:
a) Feststellen (310, 320) von Einsatzbedingungen des Endgeräts (104);
b) Vorgeben (340) von Mindest-Sicherheitsanforderungen (BS) für das Endgerät (104) entsprechend den Einsatzbedingungen durch Auswerten (330) von Kontextinformation zu den Einsatzbedingungen des Endgeräts (104);
c) automatisches Festlegen (1110-1125) und Einhalten von Sicherheitseinstellungen (S) auf dem Endgerät (104), wobei die Sicherheitseinstellungen (S) mindestens den Mindest-Sicherheitsanforderungen (BS) für das Endgerät (104) entsprechen; und
d) Steuern von Anwendungen entsprechend den Sicherheitseinstellungen (S), wobei für jede aktive Anwendung oder bei Aufruf einer Anwendung die folgenden Schritte durchgeführt werden:
d1) Bestimmen (710, 810) von Mindest-Sicherheitsanforderungen (MAS) der aktiven bzw. aufgerufenen Anwendung,
d2) Prüfen (720, 820), ob die festgelegten Sicherheitseinstellungen (S) auf dem Endgerät (104) wenigstens den Mindest-Sicherheitsanforderungen (MAS) der Anwendung entsprechen;
d3) wenn die Antwort in Schritt d2) nein lautet: Anbieten (725, 827) einer Anpassung der Sicherheitseinstellungen (S) auf dem Endgerät (104) an die Mindest-Sicherheitsanforderungen (MAS) der Anwendung einem Benutzer (102) des Endgeräts (104), und
d4) wenn die Antwort in Schritt d2) ja lautet: Belassen der Sicherheitseinstellungen (S) auf dem Endgerät (104),
wobei die Ausführung der vorstehenden Schritte a) bis d4) durch wenigstens einen auf dem Endgerät (104) aktivierten Agenten gesteuert wird.

2. Verfahren gemäß Anspruch 1, weiter **gekennzeichnet durch** den Schritt:
Darstellen (420, 933, 937) der festgelegten Sicherheitseinstellungen (S) und/oder Mindest-Sicherheitsanforderungen (BS) in einer für einen Benutzer (102) des Endgeräts (104) erkennbaren Weise, insbesondere auf einer Anzeige (246) des Endgeräts (104).

3. Verfahren gemäß Anspruch 1, weiter **gekennzeichnet durch** den Schritt:
Kennzeichnen (933, 937) von Anwendungen hinsichtlich einer Einschränkung, die sich aus den festgelegten Sicherheitseinstellungen (S) ergibt, insbesondere durch Verändern eines Sinnbilds (520) der jeweiligen Anwendung auf einer Anzeige des Endgeräts (104) in Abhängigkeit von den festgelegten Sicherheitseinstellungen (S).

4. Verfahren gemäß Anspruch 1, weiter **gekennzeichnet durch** den Schritt:
Verändern der Sicherheitseinstellungen (S), wobei ein Unterschreiten der Mindest-Sicherheitsforderungen (BS) verhindert wird, auf wenigstens eine der folgenden Situationen hin:
- Interaktion des Benutzers (102),
- Start einer Anwendung,
- Beenden einer Anwendung,
- Veränderungen von Einsatzbedingungen.

5. Verfahren gemäß Anspruch 1, **dadurch gekennzeichnet, dass** das Einhalten der Mindest-Sicherheitsanforderungen (BS) durch wenigstens eine der folgenden Maßnahmen sichergestellt wird:
- Ausschalten des Endgeräts (104);
- Beenden, Deaktivieren oder Blockieren von Anwendungen, welche die Mindest-Sicherheitsforderungen (BS) nicht erfüllen;
- Beenden, Deaktivieren oder Blockieren von Funktionen, welche die Mindest-Sicherheitsforderungen (BS) verletzen oder verletzen würden;
- Ignorieren von Benutzer-Einstellungen oder Benutzer-Eingaben, welche die Mindest-Sicherheitsforderungen (BS) verletzen würden.

6. Verfahren zur Kontrolle von Sicherheitseinstellungen eines mobilen Endgeräts (104), mit den Schritten:
A) Lokalisieren des Endgeräts (104);
B) Kontaktieren (1210) des Endgeräts (104);
C) Erkennen (1230, 1250), dass ein Agent zur Durchführung des Verfahrens nach einem der Ansprüche 1 bis 5 auf dem Endgerät installiert und aktiviert ist; und
D) Durchführen des Verfahrens nach einem der Ansprüche 1 bis 5 durch den Agenten auf dem Endgerät wobei die Schritte A) bis C) von einer Instanz (110) außerhalb des Endgeräts (104) durchgeführt werden.

7. Mobiles Endgerät (104), eingerichtet zur Durchführung des Verfahrens nach einem der Ansprüche 1 bis 5, wobei die Verfahrensschritte vorzugsweise wenigstens teilweise durch Software-Agenten durchgeführt werden.

8. Computerprogramm, umfassend Programmbefehle, die einen Computer dazu veranlassen, die Verfahrensschritte eines Verfahrens nach einem der Ansprüche 1 bis 6 auszuführen, wenn das Computerprogramm auf den Computer geladen oder von diesem ausgeführt wird.

9. Softwareprodukt, das auf einem durch einen Computer lesbaren Medium gespeichert ist und das vorzugsweise direkt in den internen Speicher eines Computers geladen werden kann und das Programmcodes zur Durchführung der Verfahrensschritte eines Verfahrens nach einem der Ansprüche 1 bis 6, wenn das Computerprogramm auf dem Computer ausgeführt wird, aufweise.

10. Digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte eines Verfahrens nach einem der Ansprüche 1 bis 6 auszuführen, verkörpert sein kann.

## Claims

1. A method for handling security configurations of a mobile terminal (104), with the steps:
a) determining (310, 320) of the operating conditions of the terminal (104);
b) specifying (340) of minimum security requirements (BS) for the terminal (104) according to the operating conditions by means of analysis (330) of context information on the operating conditions of the terminal (104);
c) automatic defining (1110-1125) and maintenance of security configurations (S) on the terminal (104), wherein the security configurations (S) correspond to at least the minimum security requirements (BS) for the terminal (104); and
d) controlling of applications according to the security configurations (S), wherein for each active application or when an application is started, the following steps are carried out:
d1) specifying (710, 810) of minimum security requirements (MAS) of the active or started application,
d2) examining (720, 820) whether the defined security configurations (S) on the terminal (104) correspond to at least the minimum security configurations (MAS) of the application;
d3) if the answer in step d2) is no: offering (725, 827) of an adjustment of the security configurations (S) on the terminal (104) to the minimum security requirements (MAS) of the application to a user (102) of the terminal (104), and
d4) if the answer in step d2) is yes: retaining the security configurations (S) on the terminal (104), wherein the execution of the above steps a) to d4) is controlled by at least one agent activated on the terminal (104).

2. The method of claim 1, further **characterized by** the step of:
presenting (420, 933, 937) the defined security configurations (S) and/or minimum security requirements (BS) in a manner which is recognizable to a user (102) of the terminal (104), particularly on a display (246) of the terminal (104).

3. The method of claim 1, further **characterized by** the step of:
identifying (933, 937) applications with regard to a restriction which results from the defined security configurations (S), particularly by changing a symbol (520) of the respective application on a display of the terminal (104) based on the defined security configurations (S).

4. The method of claim 1, further **characterized by** the step of:
changing the security configurations (S), wherein falling below the minimum security requirements (BS) concerning at least one of the following situations is avoided:
- interacting of the user (102)
- opening an application,
- closing an application,
- changing of operating conditions.

5. The method of claim 1, **characterized in that** meeting the minimum safety requirements (BS) is ensured by at least one of the following measures:
- switching the terminal (104) off;
- closing, deactivating or blocking applications which do not comply with the minimum safety requirements (BS);
- closing, deactivating or blocking functions which violate or would violate the minimum safety regulations (BS);
- ignoring user configurations or user inputs which would violate the minimum safety regulations (BS).

6. A method for controlling security configurations of a mobile terminal (104) by means of the steps of:
(A) localizing the terminal (104);
(B) contacting (1210) the terminal (104);
(C) recognizing (1230, 1250) that an agent for carrying out the method of any of the claims 1 to 5 is installed and activated on the terminal; and
(D) carrying out the method of any of the claims 1 to 5 by the agent on the terminal,
wherein the steps A) to C) are carried out by an instance (110) which is external to the terminal (104).

7. A mobile terminal (104) adapted for carrying out the method of any of the claims 1 to 5, wherein the method steps are preferably at least partially carried out by software agents.

8. A computer program, comprising program commands which cause a computer to carry out the method steps of a method of any of the claims 1 to 6 if the computer program is loaded onto the computer or executed by the same.

9. A software product which is saved on a computer-readable medium and which can preferably be loaded directly into the internal storage of a computer and which has program codes for carrying out the method steps of a method of any of the claims 1 to 6 if the computer program is executed on the computer.

10. A digital storage medium with electronically readable control signals which can work with a programmable computer to manage communication processes, wherein the control signals are configured and designed to cause the computer to carry out the method steps of a method of any of the claims 1 to 6.

## Revendications

1. Procédé servant à procéder à des manipulations de réglages de sécurité d'un terminal mobile (104), comprenant les étapes suivantes consistant à :
a) constater (310, 320) des conditions d'utilisation du terminal (104) ;
b) spécifier (340) des critères minimaux de sécurité (BS) pour le terminal (104) conformément aux conditions d'utilisation en analysant (330) des informations contextuelles portant sur les conditions d'utilisation du terminal (104) ;
c) fixer (1110 - 1125) de manière automatique et respecter des réglages de sécurité (S) sur le terminal (104), les réglages de sécurité (S) correspondant au moins aux critères minimaux de sécurité (BS) pour le terminal (104) ; et
d) commander des applications conformément aux réglages de sécurité (S), les étapes qui suivent étant effectuées pour chaque application active ou lors de l'appel d'une application, lesquelles consistent à :
d1) déterminer (710, 810) des critères minimaux de sécurité (MAS) de l'application active ou appelée ;
d2) vérifier (720, 820) si les réglages de sécurité (S) fixés sur le terminal (104) correspondent aux critères minimaux de sécurité (MAS) de l'application ;
d3) quand la réponse lors de l'étape d2) est négative : proposer (725, 827) à un utilisateur (102) du terminal (104) une adaptation des réglages de sécurité (S) sur le terminal (104) aux critères minimaux de sécurité (MAS) de l'application, et
d4) quand la réponse lors de l'étape d2) est positive : conserver les réglages de sécurité (S) sur le terminal (104),
l'exécution des étapes précédentes a) à d4) étant commandée par au moins un agent activé sur le terminal (104).

2. Procédé selon la revendication 1, **caractérisé en outre par** l'étape consistant à :
afficher (420, 933, 937) les réglages de sécurité (S) fixés et/ou les critères minimaux de sécurité (BS) d'une manière identifiable pour un utilisateur (102) du terminal (104), en particulier sur un écran (246) du terminal (104).

3. Procédé selon la revendication 1, **caractérisé par** ailleurs par l'étape consistant à :
marquer (933, 937) des applications en matière d'une restriction, qui découle des réglages de sécurité (S) fixés, en particulier en modifiant un symbole (520) de l'application respective sur un écran du terminal (104) en fonction des réglages de sécurité (S) fixés.

4. Procédé selon la revendication 1, **caractérisé en outre par** l'étape consistant à :
modifier les réglages de sécurité (S), une configuration inférieure des critères minimaux de sécurité (BS) étant empêchée, dans au moins une des situations suivantes :
- une interaction de l'utilisateur (102),
- un lancement de l'application,
- une fermeture de l'application,
- des modifications des conditions d'utilisation.

5. Procédé selon la revendication 1, **caractérisé en ce que** le respect des critères minimaux de sécurité (BS) est garanti par au moins une des mesures suivantes :
- la coupure du terminal (104) ;
- la fermeture, la désactivation ou le blocage des applications, qui ne remplissent pas les critères minimaux de sécurité (BS) ;
- la fermeture, la désactivation ou le blocage des fonctionnalités, qui enfreignent ou enfreindraient les critères minimaux de sécurité (BS) ;
- le fait d'ignorer des réglages d'utilisateur ou des entrées d'utilisateur, qui enfreindraient les critères minimaux de sécurité (BS).

6. Procédé servant à contrôler des réglages de sécurité d'un terminal mobile (104), comprenant les étapes suivantes consistant à :
A) localiser le terminal (104) ;
B) établir un contact (1210) avec le terminal (104) ;
C) identifier (1230, 1250) si un agent servant à la mise en oeuvre du procédé selon l'une quelconque des revendications 1 à 5 sur le terminal est installé et activé ; et
D) mettre en oeuvre le procédé selon l'une quelconque des revendications 1 à 5 par l'agent sur le terminal,
les étapes A) à C) étant mises en oeuvre par une instance (110) à l'extérieur du terminal (104).

7. Terminal mobile (104), mis au point aux fins de la mise en oeuvre du procédé selon l'une quelconque des revendications 1 à 5, les étapes de procédé étant mises en oeuvre de préférence au moins en partie par des agents de logiciel.

8. Programme informatique, comprenant des instructions de programme, qui amènent un ordinateur à exécuter les étapes de procédé d'un procédé selon l'une quelconque des revendications 1 à 6 quand le programme informatique est chargé sur l'ordinateur ou est exécuté par ce dernier.

9. Produit de logiciel, qui est mémorisé sur un support lisible par un ordinateur et qui peut être chargé de préférence directement dans la mémoire interne d'un ordinateur et qui présente le code de programme servant à la mise en oeuvre des étapes de procédé d'un procédé selon l'une quelconque des revendications 1 à 6 quand le programme informatique est exécuté sur l'ordinateur.

10. Support de mémoire numérique comprenant des signaux de commande lisibles de manière électrique, qui peuvent fonctionner avec un ordinateur programmable afin d'administrer des opérations de communication, les signaux de commande étant configurés et adaptés pour amener l'ordinateur à exécuter les étapes de procédé d'un procédé selon l'une quelconque des revendications 1 à 6.
